# EUROPÄISCHE PATENTSCHRIFT

(11) **EP 2 218 083 B1**
(45) Veröffentlichungstag und Bekanntmachung des Hinweises auf die Patenterteilung: **03.10.2012**
(21) Anmeldenummer: 08857783.8
(22) Anmeldetag: 04.12.2008
(51) Int. Cl.: H01F 7/02, B62J 11/00, A45C 13/10

(54) **MAGNETISCHE KOPPLUNGSVORRICHTUNG**
MAGNETIC COUPLING DEVICE
DISPOSITIF DE COUPLAGE MAGNÉTIQUE

(30) Priorität: 04.12.2007 DE 102007058188
(43) Veröffentlichungstag der Anmeldung: 18.08.2010
(73) Patentinhaber: Fidlock GmbH, 30163 Hannover (DE)
(72) Erfinder: FIEDLER, Joachim, 30175 Hannover (DE)
(74) Vertreter: Schröder, Christoph
(86) Internationale Anmeldenummer: PCT/DE2008/002028
(87) Internationale Veröffentlichungsnummer: WO 2009/071071

(56) Entgegenhaltungen:
- EP-A- 0 866 476
- DE-A1- 2 435 123
- DE-A1- 2 513 001

## Beschreibung

Die Erfindung betrifft eine von Hand betätigte Kopplungs- oder Verschlusseinrichtungvorrichtung, die zwei Elemente lösbar mechanisch verbindet, insbesondere bei Gegenständen des täglichen Gebrauchs wie z. B. die Kopplung einer Fahrradtasche mit einem Fahrrad, die Kopplung einer Laptoptasche mit einem Koffer, die Kopplung von zwei Werkzeugkisten untereinander. Sie kann aber auch als Verschluss zwischen Deckel und Boden eines Behältnisses, als Verschluss von Taschen, Türen, oder zur Kopplung von Schiebetüren und Trennwänden oder bei Spielzeugen verwendet werden.

Aus dem Stand der Technik ist eine Vielzahl solcher Kopplungseinrichtungen bekannt, wie z. B. bei einer Kopplungskonstruktion zur Befestigung von Fahrradtaschen an einem Fahrrad DE3927086 (Rixen, Kaul, Flammann). Dabei handelt es sich um eine per Hand betätigte Kopplungsvorrichtung, mit der ein Gepäckstück am Fahrrad befestigt wird. Beim Anbringen am Fahrrad muss die Federkraft einer Federrastung überwunden werden, was mitunter störenden Kraftaufwand erfordert und beim Abnehmen muss gleichzeitig eine Federrastung entriegelt werden und das Gepäckstück entnommen werden, was mitunter komplizierte Koordination erfordert. Bei DE9207525 (Ortlieb) wird eine Fahrradtasche mit verriegelbaren Haken am Gepäckträger eines Fahrrads befestigt. Hier ist die Koordination von Entriegeln der Haken und Entnahme der Tasche gut gelöst, die hervorstehenden an der Tasche angebrachten Haken stören aber, wenn die Tasche auf der Schulter getragen wird.

Um diesen Mangel zu beseitigen, werden die hervorstehenden, störenden Abschnitte solcher Kopplungsvorrichtungen mit einer Abdeckung versehen. Eine weitere Möglichkeit besteht darin, diese Abschnitte in Ausnehmungen zu verschwenken. Diese Lösungen sind aufwendig und umständlich, d. h. für den Benutzer wenig komfortabel, da zusätzliche Handgriffe erforderlich sind.

DE 2513001A1 offenbart eine Vorrichtung gemäß dem Oberbegriff der vorliegenden Ansprüche 1, 2, 3.

Daher besteht die Aufgabe der Erfindung darin, eine Kopplungsvorrichtung zu schaffen, bei der möglichst ohne jeden Zusatzhandgriff alle hervorstehenden Befestigungsabschnitte z. B. in der Tasche oder im Koffer versenkt werden und die gleichzeitig eine einfache und komfortable Kopplung und Entkopplung der beiden Elemente, d. h. z. B. der Tasche vom Koffer ermöglicht.

Die Aufgabe wird mit magnetischen Koppelvorrichtungen nach den Ansprüchen 1, 2 und 3 gelöst. Diesen drei Erfindungen liegt ein gemeinsamer, einheitlicher Erfindungsgedanke zugrunde.

Nach Anspruch 1 wird eine magnetische Kopplungsvorrichtung bereitgestellt, bestehend aus einem Element A und einem Element B, wobei die Elemente A und B entweder mit den zu verkoppelnden Gegenständen integral verbunden oder an den Gegenständen angebracht sind und die Kopplungsvorrichtung folgende Merkmale aufweist: Element A und Element B werden mittels eines Kopplungselements K gekoppelt. Das Kopplungselement K ist im Element B in zwei Freiheitsgraden beweglich: Im ersten Freiheitsgrad ist das Kopplungselement K um das Bewegungsspiel 19 zwischen einer Kopplungsposition in eine Entkopplungsposition bewegbar, im zweiten Freiheitsgrad ist das Kopplungselement K mittels einer Eingangsbetätigung verschiebbar. Im Element A ist ein Magnetsystem M1 mit wenigstens zwei Magneten M1a und M1b oder eine Magnetanordnung mit zwei Magnetpolen angeordnet und im Kopplungselement K ist ein Magnetsystem M3 mit den Magneten M3a und M3b oder eine Magnetanordnung mit mindestens 4 Magnetpolen angeordnet, von denen mindestens zwei Magnetpole auf der zum Magnetsystem M1 zeigenden Vorderseite des Kopplungselements K angeordnet sind, wobei mittels der Eingangsbetätigung im zweiten Freiheitsgrad das Kopplungselement K von der Kopplungsposition, in der sich das Kopplungselement in Anziehung zu Element A befindet, in die Entkopplungsposition, in der sich das Kopplungselement in Abstoßung zu Element A befindet, im ersten Freiheitsgrad um das Bewegungsspiel 19 bewegt wird. Im Element B ist ein Magnetsystem M2 mit wenigstens zwei Magnete M2a und M2b oder eine Magnetanordnung mit zwei Magnetpolen angeordnet und im Magnetsystem M3 des Kopplungselements K sind mindestens zwei Magnetpole auf der zum Magnetsystem M2 zeigenden Rückseite angeordnet, wobei mittels der Eingangsbetätigung im zweiten Freiheitsgrad das Kopplungselement K von der Kopplungsposition, in der sich das Kopplungselement in Abstoßung zu Element B befindet, in die Entkopplungsposition, in der sich das Kopplungselement in Anziehung zu Element B befindet, im ersten Freiheitsgrad um das Bewegungsspiel 19 bewegt wird.

Nach Anspruch 2 wird eine magnetische Kopplungsvorrichtung bereitgestellt, bestehend aus einem Element A und einem Element B, wobei die Elemente A und B entweder mit den zu verkoppelnden Gegenständen integral verbunden oder an den Gegenständen angebracht sind und die Kopplungsvorrichtung folgende Merkmale aufweist: Element A und Element B werden mittels eines Kopplungselements K gekoppelt. Das Kopplungselement K ist im Element B in zwei Freiheitsgraden beweglich: Im ersten Freiheitsgrad ist das Kopplungselement K um das Bewegungsspiel 19 zwischen einer Kopplungsposition in eine Entkopplungsposition bewegbar, im zweiten Freiheitsgrad ist das Kopplungselement K mittels einer Eingangsbetätigung verschiebbar. Im Element A ist ein Anker AfA angeordnet und im Kopplungselement K ist ein Magnet KM angeordnet und zwischen beiden ist eine Feder F1 angeordnet. Mittels der Eingangsbetätigung im zweiten Freiheitsgrad wird das Kopplungselement K von einer Position der maximalen Überdeckung von Anker AfA und Magnet KM und maximaler Anziehung in eine Position der minimalen Überdeckung und minimaler Anziehungskraft bewegt. Die Feder F1 ist so dimensioniert und angeordnet, dass sie in der Position der maximalen Überdeckung schwächer ist als die maximale magnetische Anziehung von Anker AfA und Magnet KM, sodass Anker AfA und Magnet sich annähern, und im Zustand der minimalen Überdeckung stärker ist als die minimale Anziehungskraft zwischen Anker AfA und Magnet KM, sodass Anker AfA und Magnet KM sich durch die Feder F1 abstoßen, wobei mittels der Eingangsbetätigung im zweiten Freiheitsgrad das Kopplungselement K von der Kopplungsposition, in der sich das Kopplungselement in Anziehung zu Element A befindet, in die Entkopplungsposition, in der sich das Kopplungselement in Abstoßung zu Element A befindet, im ersten Freiheitsgrad um das Bewegungsspiel 19 bewegt wird. Im Element B ist ein Anker AfB angeordnet und zwischen dem Kopplungselement K mit dem Magnet KM und dem Anker AfB ist eine Feder F2 angeordnet. Mittels der Eingangsbetätigung im zweiten Freiheitsgrad wird das Kopplungselement K von einer Position der maximalen Überdeckung von Anker AfB und Magnet KM und maximaler Anziehung in eine Position der minimalen Überdeckung und minimaler Anziehung bewegt. Die Feder F2 ist so dimensioniert und angeordnet, dass sie in der Position der maximalen Überdeckung schwächer ist als die maximale magnetische Anziehung von Anker AfB und Magnet KM, sodass Anker AfB und Magnet sich annähern und im Zustand der minimalen Überdeckung stärker ist als die minimale Anziehungskraft zwischen Anker AfB und Magnet KM, sodass Anker AfB und Magnet KM sich durch die Feder F2 abstoßen, wobei mittels der Eingangsbetätigung im zweiten Freiheitsgrad das Kopplungselement K von der Kopplungsposition, in der sich das Kopplungselement in Abstoßung zu Element B befindet, in die Entkopplungsposition, in der sich das Kopplungselement in Anziehung zu Element B befindet, im ersten Freiheitsgrad um das Bewegungsspiel 19 bewegt wird.

Nach Anspruch 3 wird eine magnetische Kopplungsvorrichtung bereitgestellt, bestehend aus einem Element A und einem Element B, wobei die Elemente A und B entweder mit den zu verkoppelnden Gegenständen integral verbunden oder an den Gegenständen angebracht sind und die Kopplungsvorrichtung folgende Merkmale aufweist: Element A und Element B werden mittels eines Kopplungselements K gekoppelt. Das Kopplungselement K ist im Element B in zwei Freiheitsgraden beweglich: Im ersten Freiheitsgrad ist das Kopplungselement K um das Bewegungsspiel 19 zwischen einer Kopplungsposition in eine Entkopplungsposition bewegbar, im zweiten Freiheitsgrad ist das Kopplungselement K mittels einer Eingangsbetätigung verschiebbar. Im Element A ist ein Magnetsystem M1 mit wenigstens zwei Magneten M1a und M1b oder eine Magnetanordnung mit zwei Magnetpolen angeordnet und im Kopplungselement K ist das Magnetsystem M3 mit den Magneten M3a und M3b oder eine Magnetanordnung mit mindestens 2 Magnetpolen angeordnet, von denen mindestens zwei Magnetpole auf der zum Magnetsystem M1 zeigenden Vorderseite des Kopplungselements K angeordnet sind, wobei mittels der Eingangsbetätigung im zweiten Freiheitsgrad das Kopplungselement K von der Kopplungsposition, in der sich das Kopplungselement in Anziehung zu Element A befindet, in die Entkopplungsposition, in der sich das Kopplungselement in Abstoßung zu Element A befindet, im ersten Freiheitsgrad um das Bewegungsspiel 19 bewegt wird. Im Element B ist ein Anker AfB angeordnet und zwischen dem Kopplungselement K mit dem Magnetsystem M3 und dem Anker AfB ist eine Feder F2 angeordnet. Mittels der Eingangsbetätigung im zweiten Freiheitsgrad wird das Kopplungselement K von einer Position der maximalen Überdeckung von Anker AfB und Magnetsystem M3 und maximaler Anziehung in eine Position der minimalen Überdeckung und minimaler Anziehung bewegt. Die Feder F2 ist so dimensioniert und angeordnet, dass sie in der Position der maximalen Überdeckung schwächer ist als die maximale magnetischen Anziehung von Anker AfB und Magnetsystem M3, sodass Anker AfB und Magnet sich annähern und im Zustand der minimalen Überdeckung stärker ist als die minimale Anziehungskraft zwischen Anker AfB und Magnetsystem M3, sodass Anker AfB und Magnetsystem M3 sich durch die Feder F2 abstoßen, wobei mittels der Eingangsbetätigung im zweiten Freiheitsgrad das Kopplungselement K von der Kopplungsposition, in der sich das Kopplungselement in Abstoßung zu Element B befindet, in die Entkopplungsposition, in der sich das Kopplungselement in Anziehung zu Element B befindet, im ersten Freiheitsgrad um das Bewegungsspiel 19 bewegt wird.

Nach Anspruch 4 wird das Kopplungselement K mittels einer Eingangsbetätigung im zweiten Freiheitsgrad gedreht.

Nach Anspruch 5 wird das Kopplungselement K mittels einer Eingangsbetätigung im zweiten Freiheitsgrad linear verschoben.

Nach Anspruch 6 wird das Kopplungselement K mittels einer Eingangsbetätigung im zweiten Freiheitsgrad auf einer Kreisbahn um den Mittelpunkt 21 geschwenkt.

Nach Anspruch 7 ragt das Kopplungselement K in Kopplungsposition erhaben aus dem Element b heraus und bildet mit einer Vertiefung V im Element A einen Formschluss, der die Elemente A und B mechanisch gegen Querzug sichert.

Die Erfindung wird nachfolgend anhand von Ausführungsbeispielen und schematischen Zeichnungen näher erläutert:
Zuerst wird die Erfindung anhand einer Dreh-Kopplungsvorrichtung beschrieben:

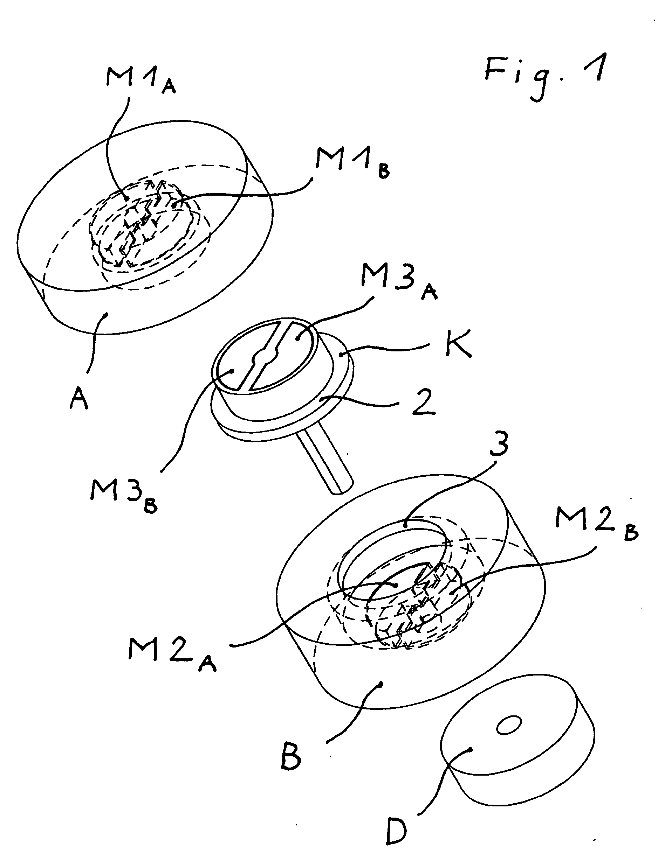

   Fig. 1 zeigt in Explosionsdarstellung eine Dreh-Kopplungsvorrichtung nach Patentanspruch 1 bestehend aus einem Element A mit dem Magnetsystem M1 aus den Magneten M1a und M1b und einem Element B mit dem Magnetsystem M2 aus den Magneten M2a und M2b. Im Element B ist ein in zwei Freiheitsgraden bewegliches Kopplungselement K vorgesehen, das in einem ersten Freiheitsgrad in axialer Richtung um das durch Anschlag 2 und Anschlag 3 begrenzte Bewegungsspiel 19 beweglich ist und in einem zweiten Freiheitsgrad im Element B über den Drehgriff D drehbar betätigbar ist. Im Kopplungselement K ist das Magnetsystem M3 aus den Magneten M3a und M3b mit vier Magnetpolen, davon je zwei ungleichnamige Pole, auf Vorderseite und Rückseite, angeordnet.

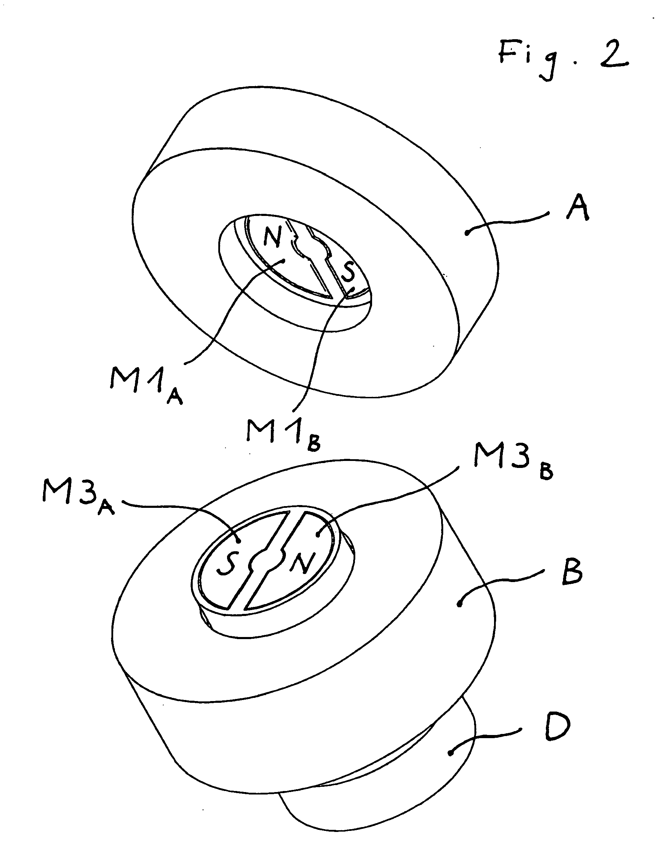

   Fig. 2 zeigt in perspektivischer Ansicht die Dreh-Kopplungsvorrichtung mit voneinander getrennten Elementen A und B, wobei sich das Kopplungselement K in der Kopplungsposition befindet, in der sich Magnetsystem M3 und Magnetsystem M2 in Abstoßung befinden und Magnetsystem M1 und Magnetsystem M3 sich in Anziehung befinden.

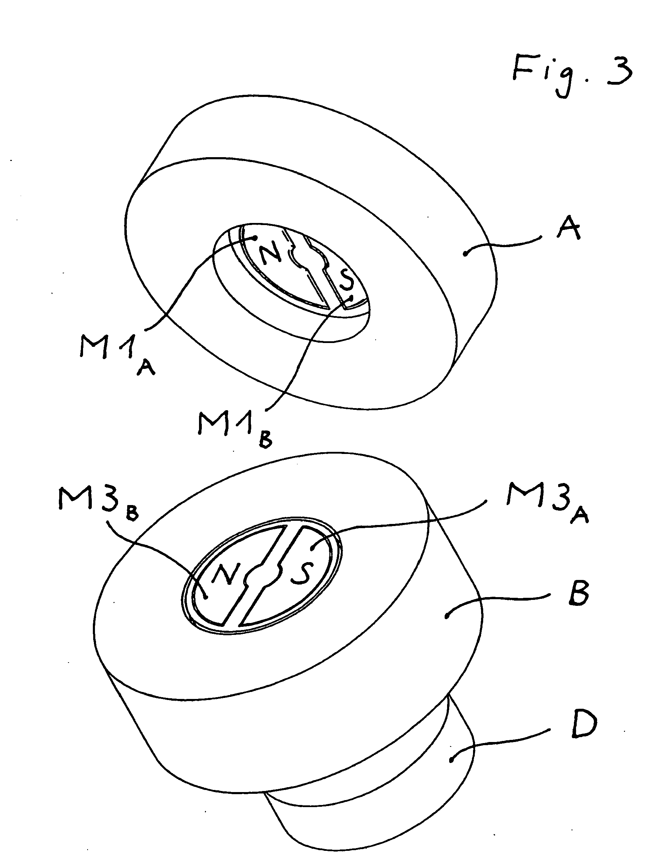

   Fig. 3 zeigt in perspektivischer Ansicht die Dreh-Kopplungsvorrichtung mit voneinander getrennten Elementen A und B, wobei sich das Kopplungselement K in der Entkopplungsposition befindet, in der sich Magnetsystem M3 und Magnetsystem M2 in Anziehung befinden und Magnetsystem M1 und Magnetsystem M3 sich in Abstoßung befinden.

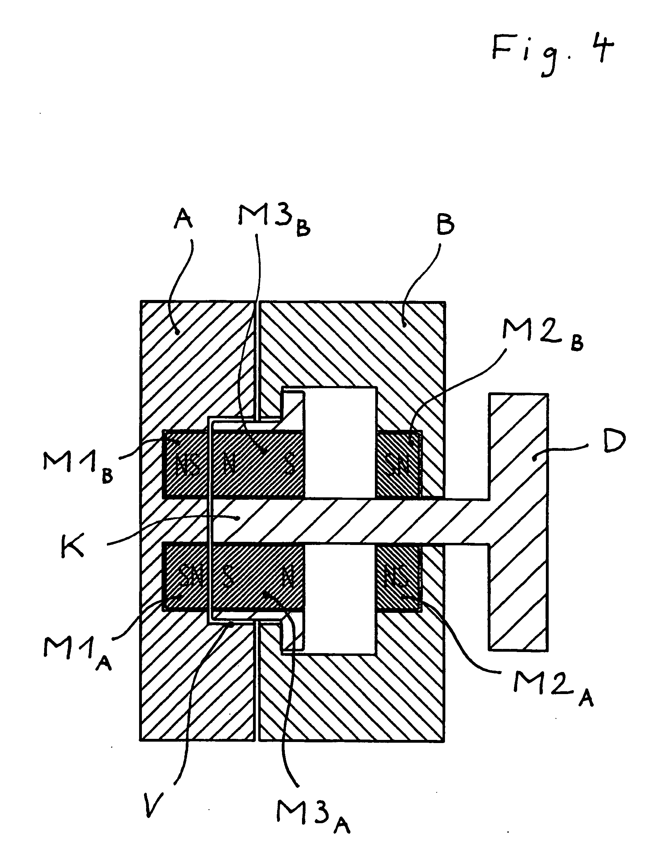

   Fig. 4 zeigt in Schnittansicht die Dreh-Kopplungsvorrichtung mit gekoppelten Elementen A und B, wobei sich das Kopplungselement K in der Kopplungsposition befindet, in der sich Magnetsystem M3 und Magnetsystem M2 in Abstoßung befinden und Magnetsystem M1 und Magnetsystem M3 sich in Anziehung befinden. In diesem Ausführungsbeispiel besteht nach Schutzanspruch 7 zusätzlich zum magnetischen Kraftschluss ein Formschluss zwischen dem Element A und B, indem das Kopplungselement K in Kopplungsposition erhaben aus dem Element B heraussteht und in die Vertiefung V in Element A eingreift, und so Element A und B gegen Querzug gesichert sind.

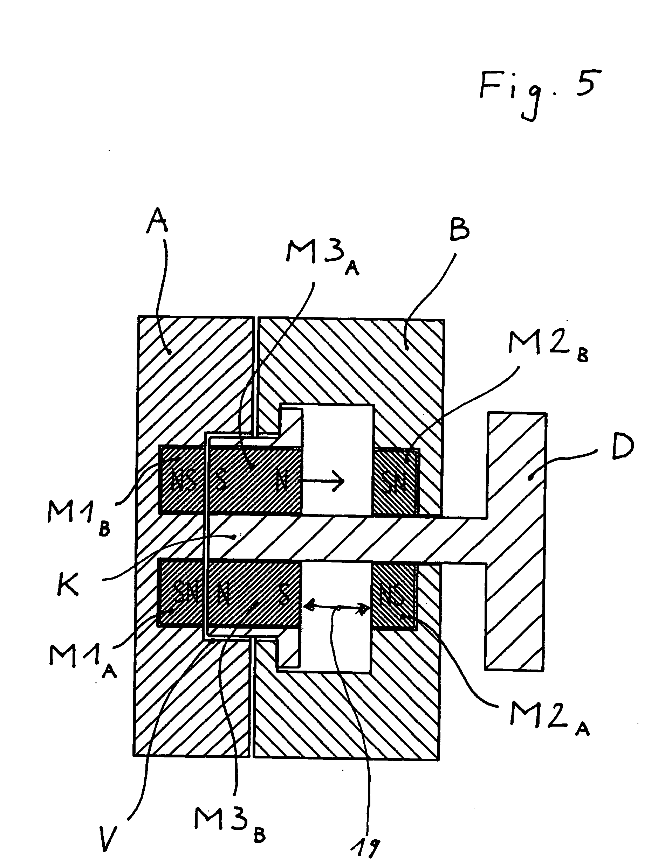

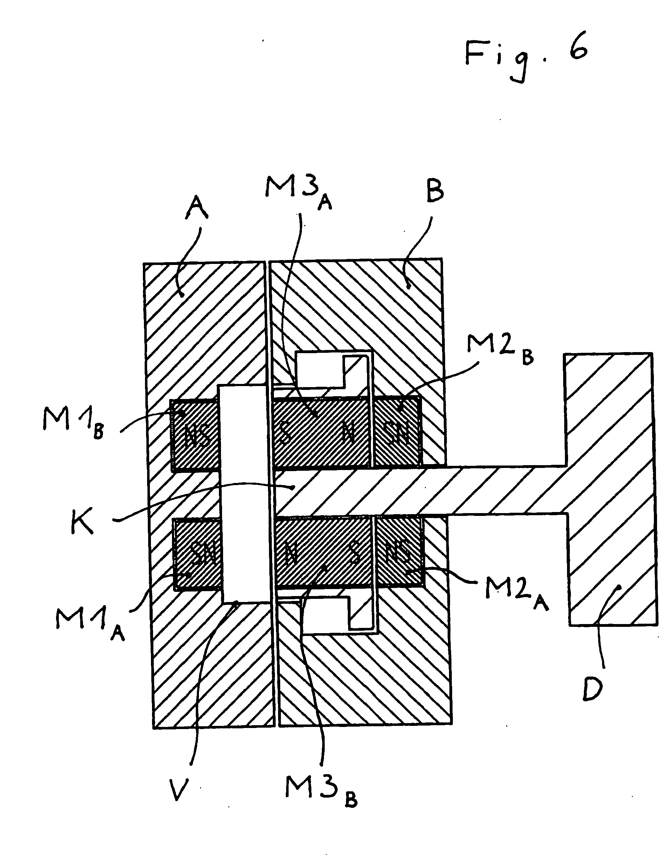

Über den Drehgriff D, der mit Kopplungselement K fest verbunden ist, kann das Kopplungselement K so in dem zweiten Freiheitsgrad verdreht werden, dass wie in Fig. 5 gezeigt, die Magnetsysteme M1 und M3 in die instabile abstoßende Position gelangen und sich das Kopplungselement K als Folge davon im ersten Freiheitsgrad um das Bewegungsspiel 19 in Pfeilrichtung aus der Kopplungsposition in die Entkopplungsposition bewegt, die als Nächstes in Fig. 6 gezeigt ist und in der sich Magnetsystem M3 und Magnetsystem M2 in Anziehung befinden und Magnetsystem M1 und Magnetsystem M3 sich in Abstoßung befinden.

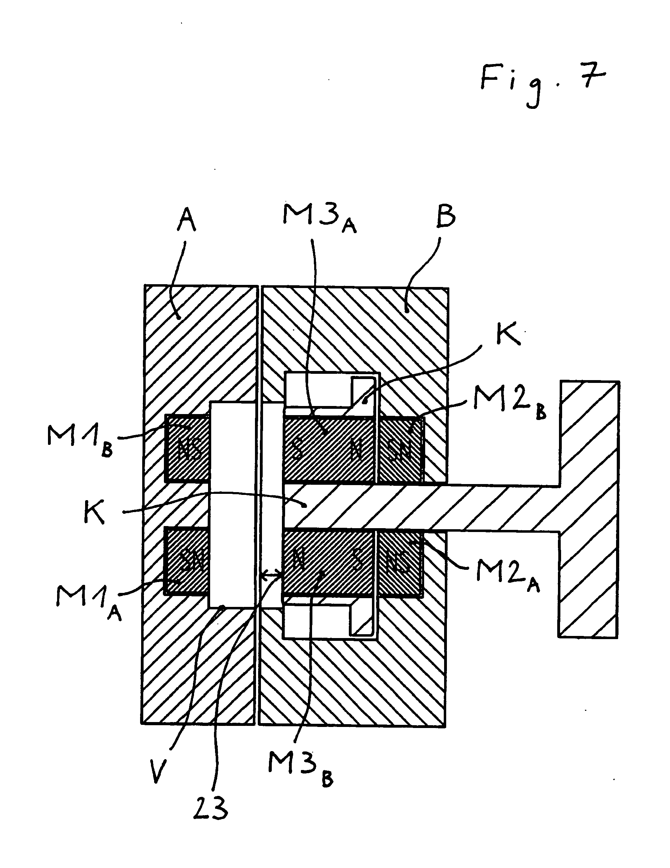

Fig. 7 zeigt eine vorteilhafte Weiterbildung der Erfindung, in der das Kopplungselement K in Entkopplungsposition in Element B so weit versenkt ist, dass die Magnete M3a/b einen Sicherheitsabstand 23 zu versehentlich mit Element B in Berührung kommenden Magnetstreifen, beispielsweise zu Kreditkarten haben.

Die Fig. 8 bis 11 zeigen eine Ausführungsform der Erfindung als Schiebe-kopplungsvorrichtung nach Anspruch 1 und Anspruch 5.

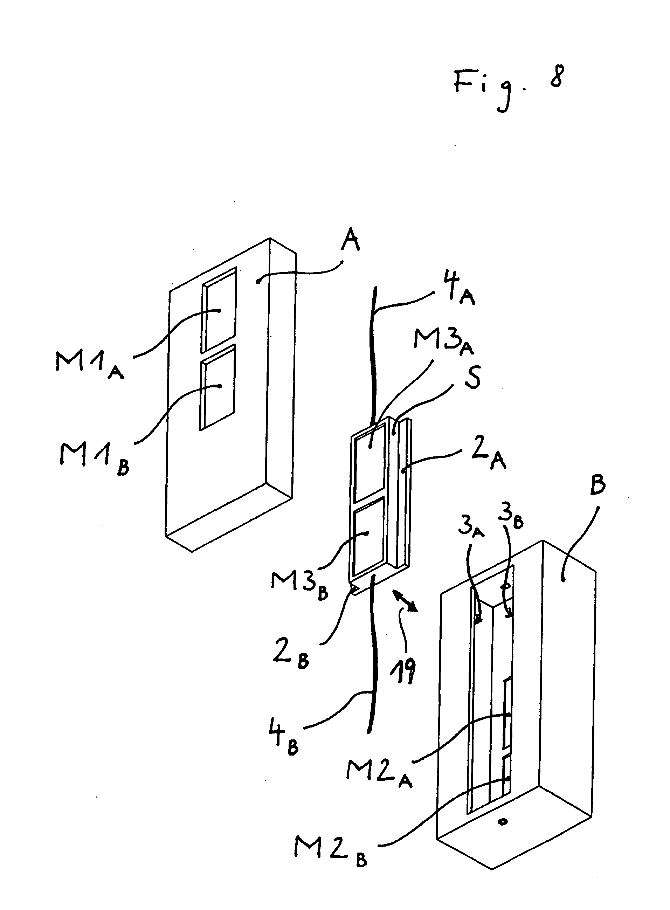

Fig. 8 zeigt eine Explosionsdarstellung dieser Ausführungsform. Diese besteht im Einzelnen aus dem Element A mit dem Magnetsystem M1 aus den Magneten M1a und M1b und dem Element B mit dem Magnetsystem M2 aus den Magneten M2a und M2b, sowie dem Schiebekopplungselement S mit dem Magnetsystem M3 aus den Magneten M3a und M3b mit zwei Magnetpolen auf der Vorderseite und zwei Magnetpolen auf der Rückseite. Das Schiebekopplungselement S ist im Element B in einem ersten Freiheitsgrad um das durch die Anschläge 2a/b und 3a/b nach vorne begrenzte Bewegungsspiel 19 beweglich, und in einem zweiten Freiheitsgrad durch die Seilzüge 4a und 4b durch eine Eingangsbetätigung verschiebbar.

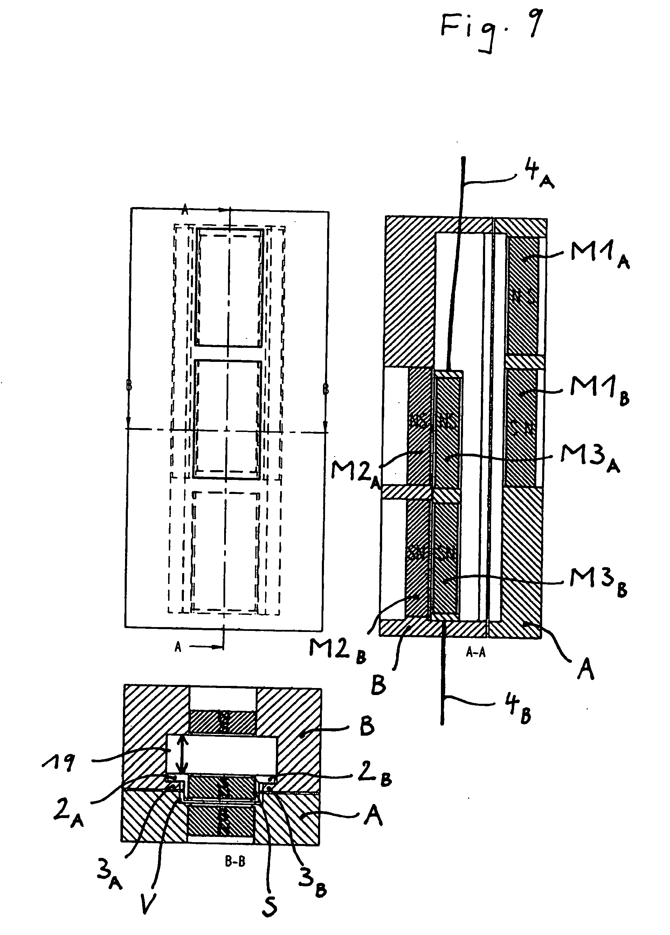

Fig. 9 zeigt die Schiebekopplung in Querschnitt B-B und Längsschnitt A-A in Entkopplungsposition. Im Querschnitt erkennt man, wie die Anschläge 2a/b und 3a/b im Element B die Beweglichkeit des Schiebeelements S im ersten Freiheitsgrad auf das Bewegungsspiel 19 begrenzen, im Längsschnitt sieht man, dass in der Entkopplungsposition sich Magnetsystem M3 und Magnetsystem M2 in Anziehung befinden und Magnetsystem M1 und Magnetsystem M3 sich in Abstoßung befinden.

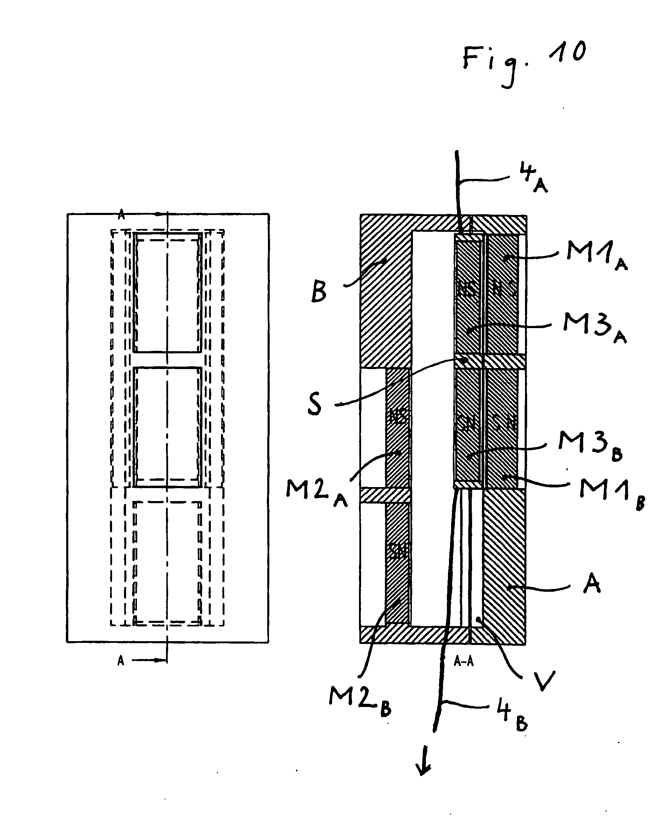

Durch den Seilzug 4a kann nun das Schiebekopplungselement S so verschoben werden, dass es wie in Fig. 10 gezeigt in die Kopplungsposition verschoben wird, in der sich Magnetsystem M3 und Magnetsystem M2 in Abstoßung befinden und Magnetsystem M1 und Magnetsystem M3 sich in Anziehung befinden.

Durch einen Zug am Seilzug 4b in Pfeilrichtung erfolgt die umgekehrte Bewegung: Das Schiebekopplungselement S wird von Element A abgestoßen und in Element B versenkt.

In diesem Ausführungsbeispiel besteht nach Schutzanspruch 7 zusätzlich zum magnetischen Kraftschluss ein Formschluss zwischen dem Element A und B, indem das Kopplungselement K in Kopplungsposition erhaben aus dem Element B heraussteht und in die Vertiefung V in Element A eingreift, und so Element A und B gegen Querzug gesichert sind.

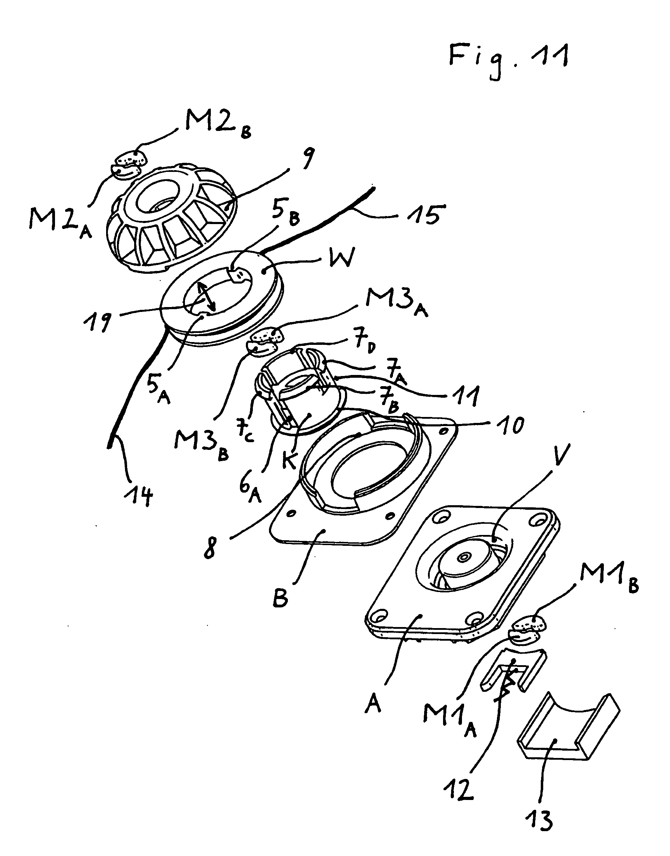

Die Fig. 11 - 15 zeigen eine spezielle Ausführungsform einer erfindungsgemäßen Dreh-Kopplungseinrichtung, z. B. als Kopplungseinrichtung zwischen einer Tasche und einer am Fahrrad angebrachten Halterung oder als Kopplungseinrichtung zwischen einer Tasche und einem Rollenkoffer.

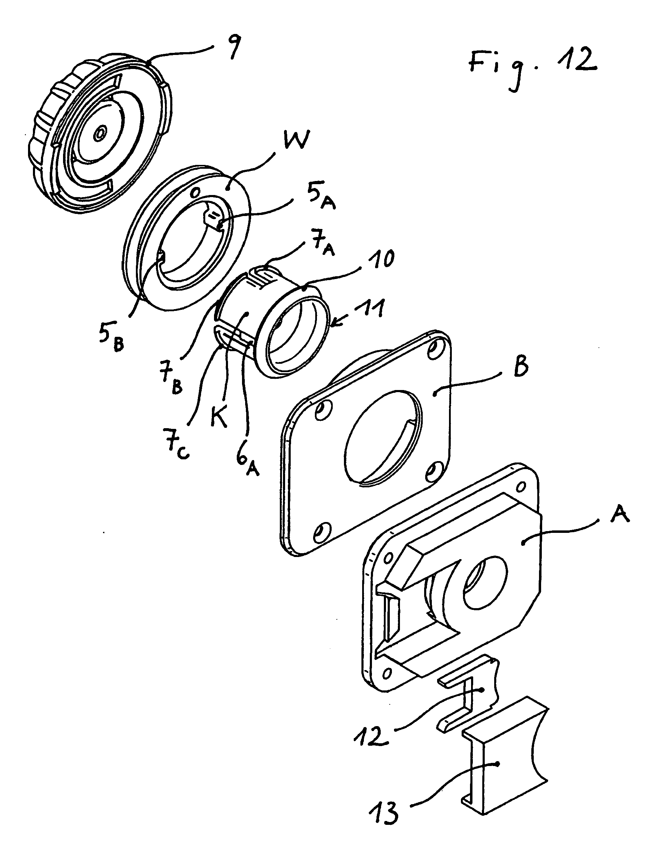

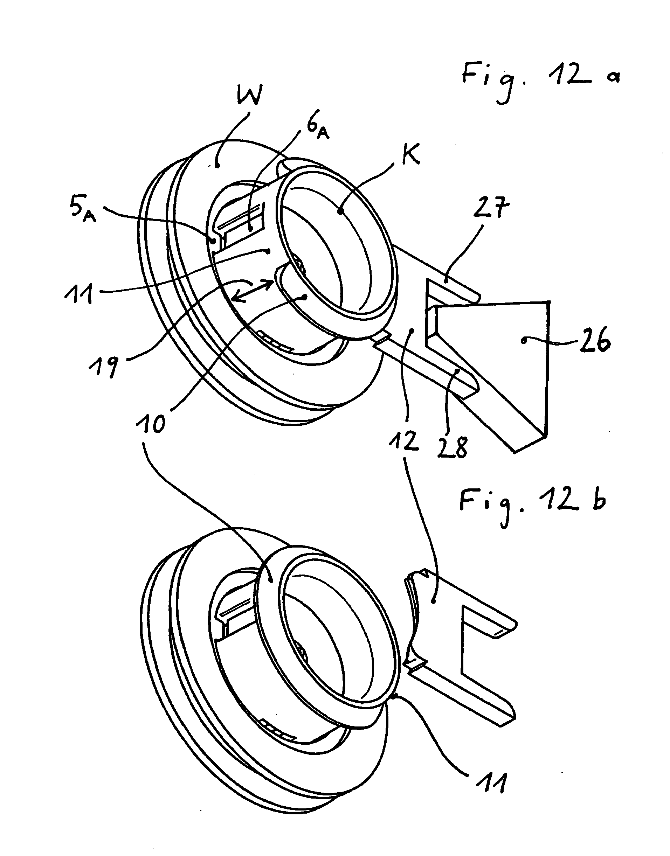

Die Fig. 11 und Fig12 zeigen eine Explosionsdarstellung der Kopplungsvorrichtung in der Vorderansicht und Rückansicht. In Element A sind die Magnete M1a/b angeordnet. Im Element B ist das Kopplungselement K mit den Magneten M3a/b in zwei Freiheitsgraden beweglich angeordnet. Das Kopplungselement K ist mit den Anschlagrastungen 7a/b/c/d und einem Widerlager-Rand 10 auf ein Bewegungsspiel 19 im ersten Freiheitsgrad begrenzt. Eine Eingangsbetätigung vom Seilzug 14 wird über die Führungsnasen 5a/b der Winde W und die Führungen 6a/b im Kopplungselement K auf das Kopplungselement übertragen, sodass das Kopplungselement K in einem zweiten Freiheitsgrad zusammen mit der Winde W in der Windenführung 8 gedreht wird. Die Winde wird rückseitig mit der Abdeckung 9 gehalten, in der die MagneteM2a/b angeordnet sind.

Der Widerlager-Rand 10 rastet in Kopplungsposition hinter die Federrastung 12 ein und bildet eine formschlüssige Verriegelung. In Entkopplungsposition wird die Aussparung im Widerlagerrand 11 an die Position der Federrastung 12 gedreht, sodass die Verriegelung aufgehoben ist, während gleichzeitig die Magnetsysteme M1 und M3 auf Abstoßung gepolt wurden.

Die Fig. 12a zeigt zum besseren Verständnis der Rastverriegelung und des Bewegungsspiels 19 nur das Kopplungselement K, die Winde W und die Federrastung 12. Hier erkennt man, dass in eingerastetem Zustand die Federrastung 12 hinter den Widerlagerrand 10 eingreift, während in Fig. 12b das Kopplungselement K so weit im zweiten Freiheitsgrad gedreht wurde, dass die Lücke im Widerlagerrand 11 die Federrastung 12 freigegeben hat. Das federnde Zurückschnappen der Federrastung 12 wird in dieser speziellen Ausführungsform der Erfindung durch das Zusammenwirken der elastischen Federbeine 27 und 28 und dem in Element A fest angeordneten kraftumlenkenden Dreieck 26 erreicht.

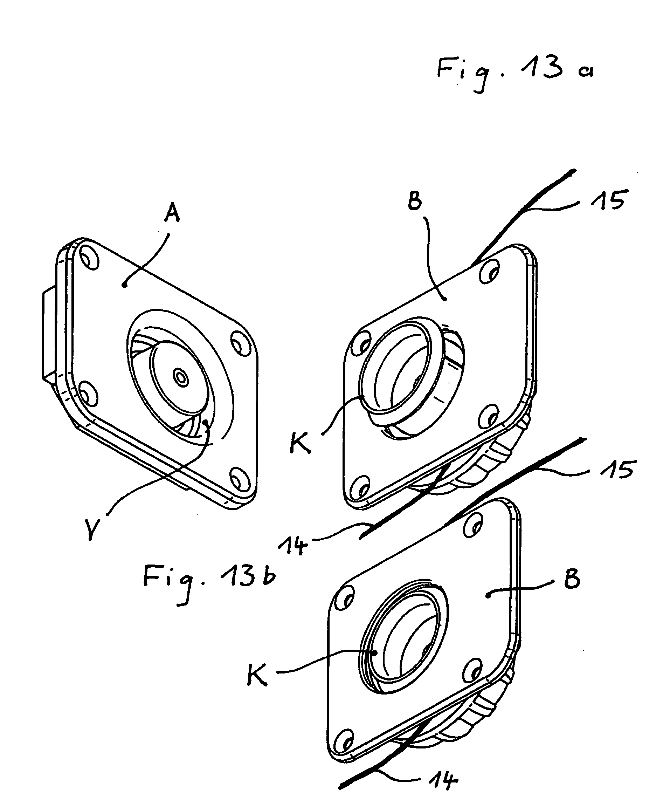

Die Fig. 13a, Fig. 13b zeigen Element A und Element B in voneinander getrenntem Zustand in perspektivischer Ansicht. In Fig. 13a befindet sich das Kopplungselement K in der Kopplungsposition, in der sich Magnetsystem M3 und Magnetsystem M2 in Abstoßung befinden und das Kopplungselement erhaben aus Element B hervorsteht und Magnetsystem M1 und Magnetsystem M3 sich in Anziehung befinden, wodurch eine magnetische Kopplung von Element A und Element B ermöglicht wird.

Die Fig. 13b zeigt Element B mit Kopplungselement K in Entkopplungsposition, in der sich Magnetsystem M3 und Magnetsystem M2 in Anziehung befinden und das Kopplungselement im Element B zurückgezogen ist.

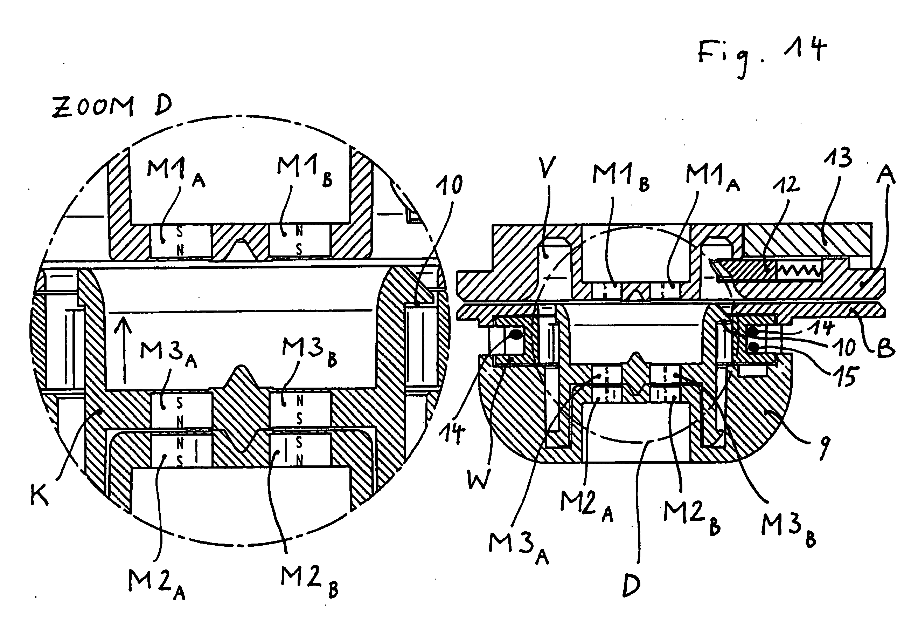

Die Fig. 14 zeigt in Schnittansicht und Detailvergrößerung die Phase, in der das Kopplungselement K im Element B in der Entkopplungsposition im zweiten Freiheitsgrad durch die Betätigung so gedreht wurde, dass die Magnete M1a/b und M3a/b in magnetische Abstoßung zueinander gelangt sind und das Kopplungselement K nun in der Folge davon aus dem Element B herausgedrückt wird. Die Drehung wird hier dadurch erreicht, dass ein Zug am um die Winde W gelegten Seilzug 14 eine Drehung der Winde W bewirkt, indem eine genügende Haftreibung zwischen dem unter Zug gespannten Seilzug 14 und der Winde W entstanden ist. Die Spannung wird auf der einen Seite durch das Rückstellgummi 15 und durch den Zug am Seilzug 14 auf der anderen Seite erreicht.

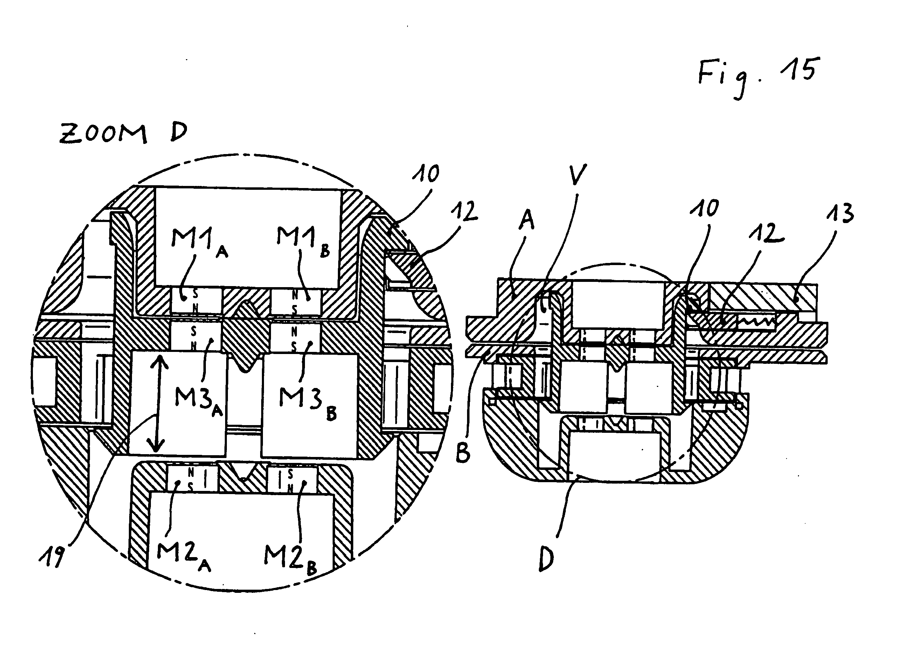

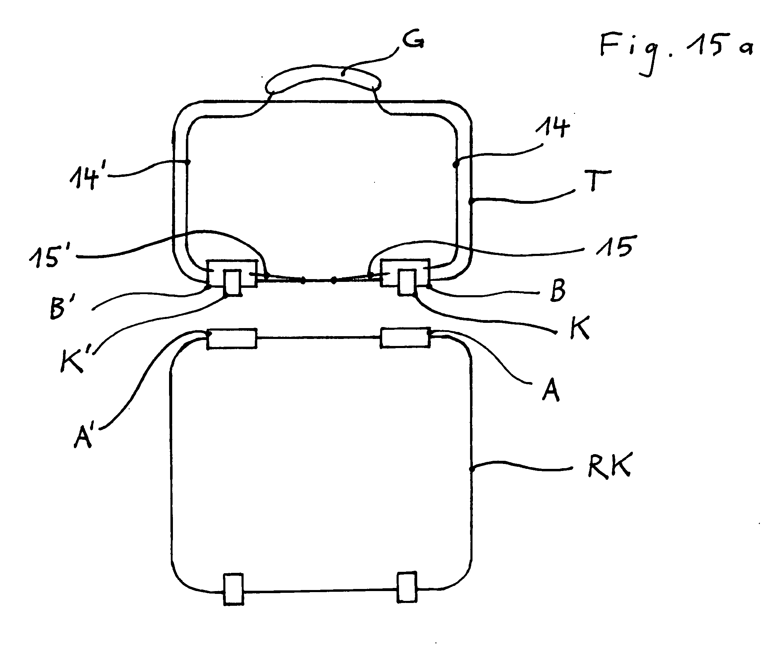

Die Fig. 15 zeigt in selbiger Ansicht die Kopplungsposition. Hier ist durch die magnetische Anziehung zwischen dem Magnetsystem M1 und dem Magnetsystem M3 und der Abstoßung zwischen dem Magnetsystem M2 und dem Magnetsystem M3 das Kopplungselement K in die Vertiefung V im Element A im ersten Freiheitsgrad um das Bewegungsspiel 19 bewegt worden und der Widerlagerrand 10 des Kopplungselements K ist hinter die Federrastung 12 geschnappt, sodass eine allseitig formschlüssige Verbindung zwischen Element A und Element B entstanden ist. Wenn nun der Seilzug 14 wieder entlastet wird und damit die Haftung zwischen Seilzug 14 und Winde W geringer wird, zieht der Rückstellgummi 15 den Seilzug 14 zurück, ohne dass die Winde W sich dreht, da der Seilzug 14, die Winde, die Art der Umwicklung und die Magnetsysteme M2 und M3 so ausgelegt sind, dass das zum Drehen des Kopplungselements K (mit der damit verbunden Umpolung der Magnetsysteme M1 und M3) erforderliche Drehmoment größer ist als die Haftreibung zwischen Seilzug 14 und Winde W in entspanntem Zustand.

Diese Ausführung des Antriebs des Kopplungselements K ist besonders dann praktisch, wenn wie in Fig. 15a gezeigt, die Kopplungsvorrichtung eine Tasche T an einem Rollenkoffer auf die Art koppelt, dass am Rollenkoffer RK die Element A und A' angeordnet sind und an der Tasche T die Element B und B' angeordnet sind. Die Kopplungselemente K und K' werden in diesem Fall über den Griff G der Tasche T mit den Seilzug 14 und 14' im zweiten Freiheitsgrad betätigt. Hierdurch ergibt sich folgende Funktionalität der Erfindung, die nachfolgend schrittweise beschrieben wird:
Die Tasche T steht am Boden und wird am Griff G angehoben. Durch den Griff werden die Seilzüge 14, 14' betätigt und die Kopplungselemente K, K' werden im zweiten Freiheitsgrad gedreht und durch die magnetische Abstoßung zwischen Magnetsystem M3 und Magnetsystem M2 werden die Kopplungselemente K, K' in die Kopplungsposition im ersten Freiheitsgrad aus den Elementen B, B' herausgedrückt.

In Kopplungsposition stehen die Magnetsysteme M3 und M1 in Anziehungsstellung und die Tasche T wird durch die Magnetkraft an das am Rollenkoffer angeordneten Element A herangezogen, sobald sie in die Nähe gebracht wird.

Nun ist die Tasche T fest am Rollenkoffer RK angekoppelt. Der Griff G wird losgelassen und durch die Rückstellgummis 15, 15' werden die Seilzüge 14, 14' in Ruhelage zurückgezogen, ohne dass die Kopplungselemente K, K' gedreht werden, da die Haftreibung zwischen dem Seilzug 14 und der Winde W geringer ausgelegt ist als das zum Drehen erforderliche Drehmoment des sich mit M3 und M1 am Element A anziehenden Kopplungselementes K.

Wird der Griff G nun wieder betätigt, werden die Kopplungselemente K,K' erneut im zweiten Freiheitsgrad gedreht, die Lücke im Widerlager 11 gibt die Federrastung 12 frei, M1 und M3 stoßen sich ab und M3 und M2 ziehen das Kopplungselement K wieder in die Entkopplungsposition in B zurück. Somit ist die Tasche vom Fahrrad oder vom Koffer entkoppelt worden und das Kopplungselement k im Element B versenkt worden, ohne dass dazu zusätzliche Handgriffe erforderlich waren.

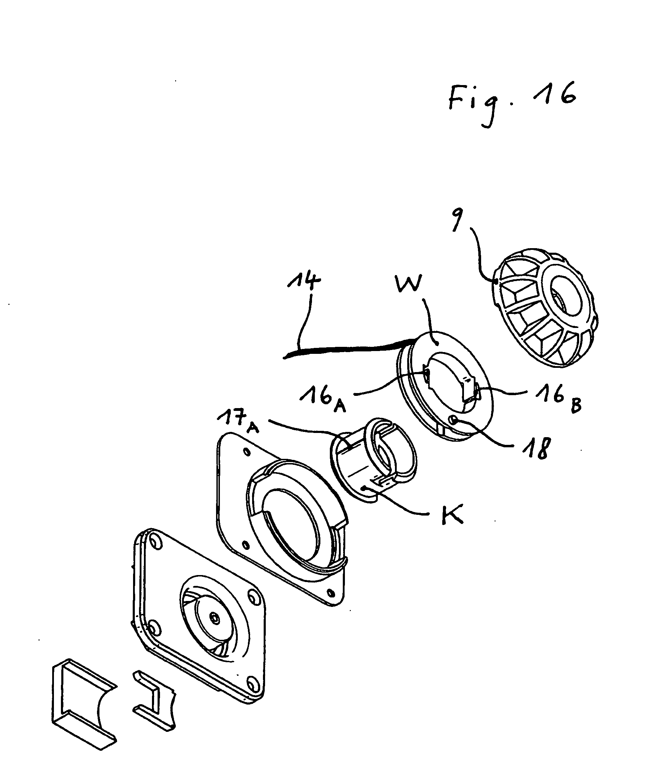

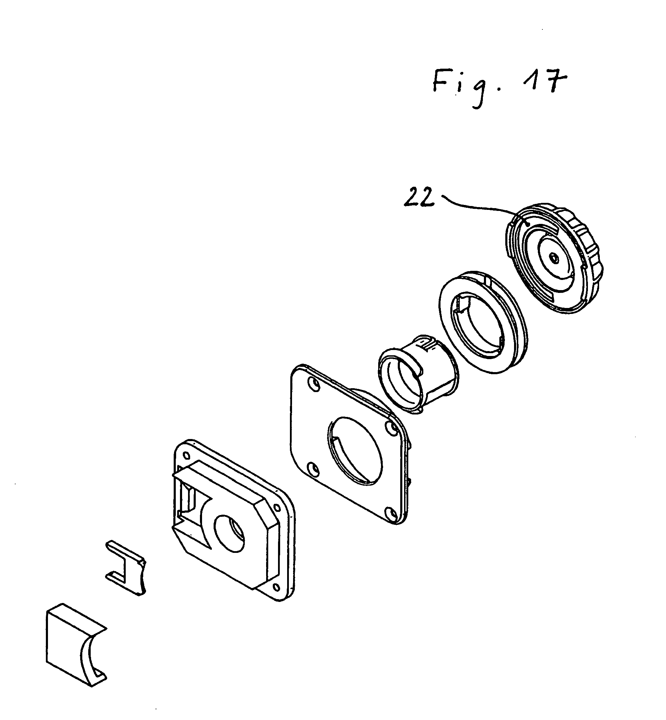

Fig. 16 zeigt nun, wie vorstehend beschriebene Betätigung des Kopplungselements zwischen Kopplungsposition und Entkopplungsposition und wieder zurück in die Kopplungsposition über eine wiederholte Betätigung über ein Freilaufgetriebe zwischen der Winde W und dem Kopplungselement K erzeugt wird. Dazu werden federnde Sperrklinken 16a/b angewendet, die sich in Vorsprüngen 17a/b nur in einer Drehrichtung verhaken können. Bei dieser Konstruktion wird der Seilzug 14 in mindestens einem Punkt fest mit der Winde verbunden. In diesem Fall ist es sinnvoll, die Drehbarkeit der Winde über einen Anschlag 18, der in einer Aussparung 22 (Fig. 17) in der Abdeckung 9 läuft, auf ca. 180° Grad zu begrenzen. Auch hier muss die Reibung der Sperrklinken 16a/b mit dem Kopplungselement K in Rückdrehrichtung so ausgelegt sein, dass die Gleitreibung dieser Elemente kleiner ist, als das magnetische Halte-Drehmoment zwischen M2 und M3, und zwischen M1 und M3.

Eine vorteilhafte Weiterentwicklung ist die Sperrung des Seilzugs durch ein zusätzliches Betätigungselement, damit beim normalen Tragen der Tasche nicht unbeabsichtigt das Kopplungselement betätigt wird.

Dem Fachmann ist klar, dass je nach Ausführungsform vielfältige Variationen eines Antriebes einer Winde mit Zahnstangen, Seilzügen oder Stangen mit oder ohne Freilauf möglich sind.

Dem Fachmann ist weiterhin klar, dass bei Ausführung als Schiebekopplungsvorrichtung auch hier vielfältige Antriebslösungen denkbar sind, die je nach Aufgabenstellung eine Hin- und Her-Bewegung des Kopplungselement entweder durch wiederholte Betätigung desselben Betätigungselements oder durch eine Hin- und Her Bewegung eines Betätigungselements oder durch die Betätigung von zwei von verschiedenen Seiten wirkenden Betätigungselementen zustande gebracht werden kann.

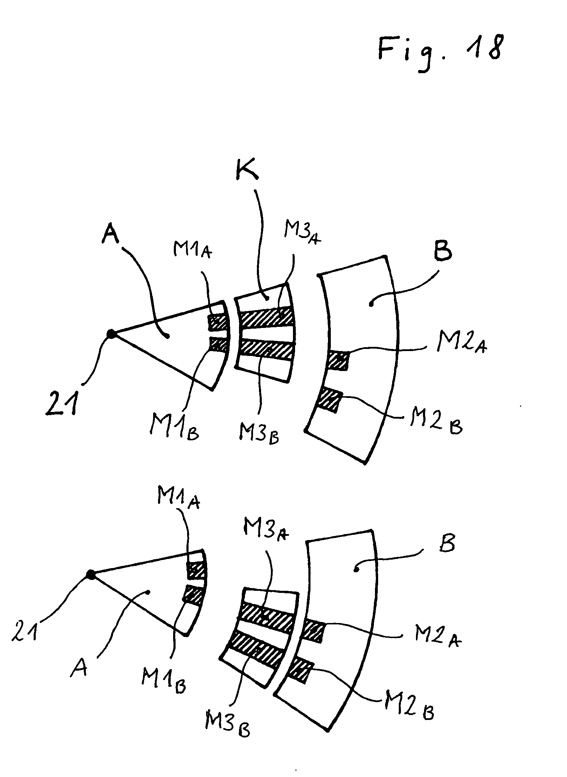

In Fig. 18 ist ein Ausführungsbeispiel der Erfindung als Schwenk-Kopplung nach Anspruch 6 gezeigt, bei der das Kopplungselement K im zweiten Freiheitsgrad um eine Kippachse 21 auf einer Kreisbahn schwenkbar gelagert ist.

Dem Fachmann ist klar, dass ein von Anziehung auf Abstoßung verpolbares Magnetsystem auch aus einem Paar von jeweils einem Magneten und einem ferromagnetischen Anker gebildet werden kann, wenn in Anziehungsposition sich jeweils ein Anker und ein Magnet anziehend gegenüberliegen und in Abstoßungsposition sich die beiden Magnete abstoßend gegenüberliegen.

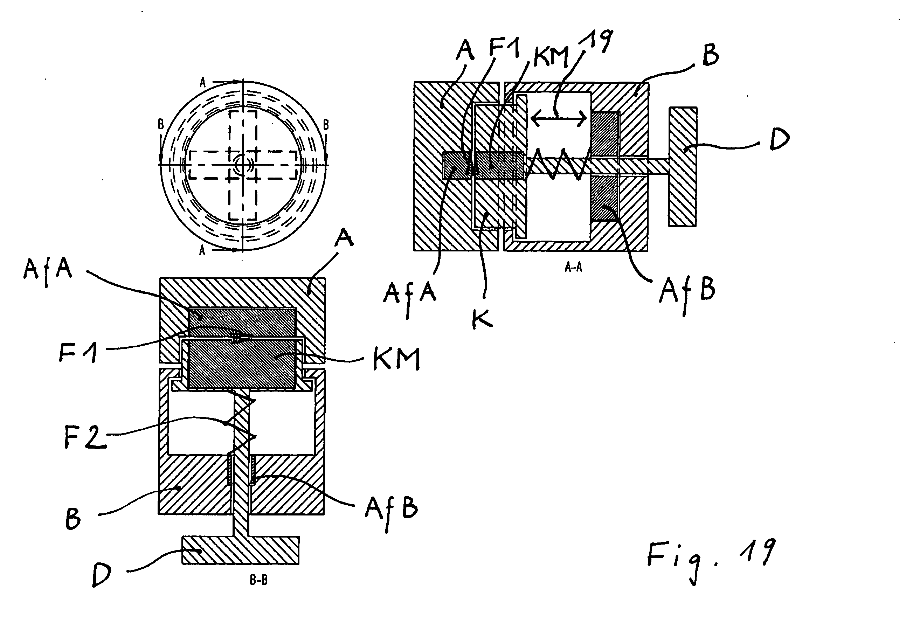

Fig 19 zeigt eine allgemeine Ausführungsform der Erfindung als Dreh-Kopplungsvorrichtung nach Anspruch 2 in Schnittdarstellung in den zwei Schnitten A-A und B-B in Kopplungsposition.

Das Kopplungselement K ist in zwei Freiheitsgraden im Element B beweglich gelagert. Im ersten Freiheitsgrad ist das Element K um das Bewegungsspiel 19 zwischen der Kopplungsposition und der Entkopplungsposition beweglich. Im zweiten Freiheitsgrad ist das Kopplungselement K über den Drehgriff D drehend zu betätigen.

Im Element A ist ein Anker AfA und im Element B ist ein Anker AfB angeordnet. Im Kopplungselement ist ein Magnet KM angeordnet. Anker AfA und Magnet KM befinden sich in der Kopplungsposition in einer Position der maximalen Überdeckung von Anker und Magnet und maximaler Anziehung zueinander. Anker AfB und Magnet KM befinden sich in einer Position der minimalen Überdeckung und minimaler Anziehung zueinander.

Zwischen dem Anker AfA und dem Element A bzw. zwischen dem Anker AfB und dem Element B sind die Federn F1 und F2 angeordnet. Die Federn sind so dimensioniert und angeordnet, dass die Feder 1 in der Position maximaler Überdeckung von AfA und KM schwächer ist als die Anziehungskraft zwischen AfA und KM und die Feder 2 in der Position minimaler Anziehungskraft zwischen AfB und KM stärker ist als die Anziehungskraft zwischen AfB und KM. Das Kopplungselement K ist also zum Element A magnetisch angezogen und durch Federkraft gedrückt und Element A und Element B sind magnetisch gekoppelt.

Zusätzlich sind Element A und Element B nach Anspruch 7 mit dem Formschluss zwischen dem aus Element B hervorstehenden Kopplungselement K und der Vertiefung V gegen Querzug gesichert.

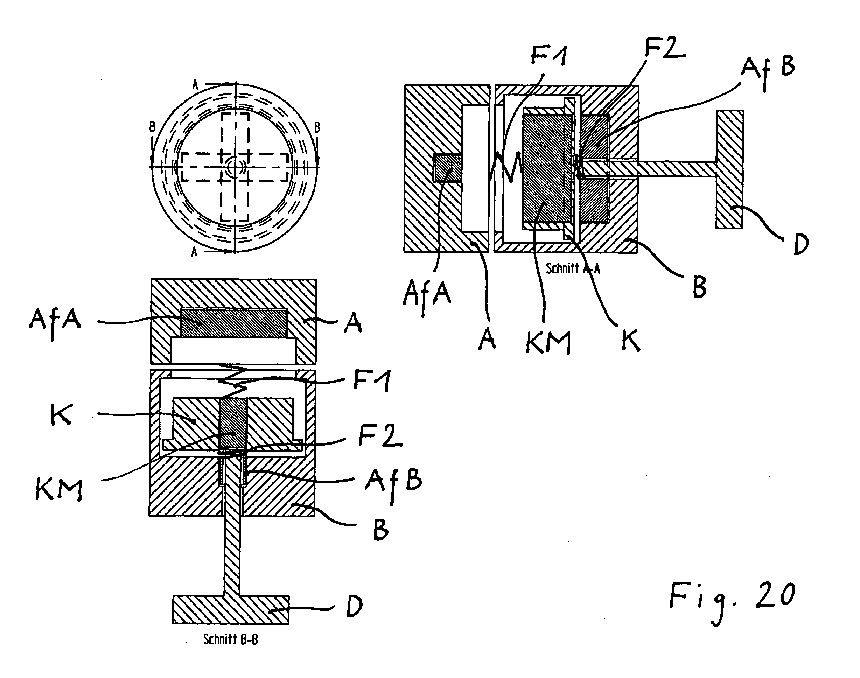

Fig. 20 zeigt wie nach einer Betätigung des Kopplungselements K über den Drehgriff D die Dreh-Kopplungsvorrichtung in die Entkopplungsposition gebracht wurde.

In der Entkopplungsposition ist die Anziehung zwischen AfA und KM, die sich in der Position minimaler Überdeckung befinden, schwächer als die Federkraft der Feder 1 und die Anziehung zwischen AfB und KM, die sich in der Position der maximalen Überdeckung befinden, ist stärker als die Federkraft der Feder 2. Das Kopplungselement K ist also zum Element B gezogen/ gedrückt und Element A und Element B sind magnetisch entkoppelt.

Zusätzlich ist nach Anspruch 7 der Formschluss zwischen Element A und Element B aufgehoben, da das Kopplungselement K in Element B zurückgezogen ist.

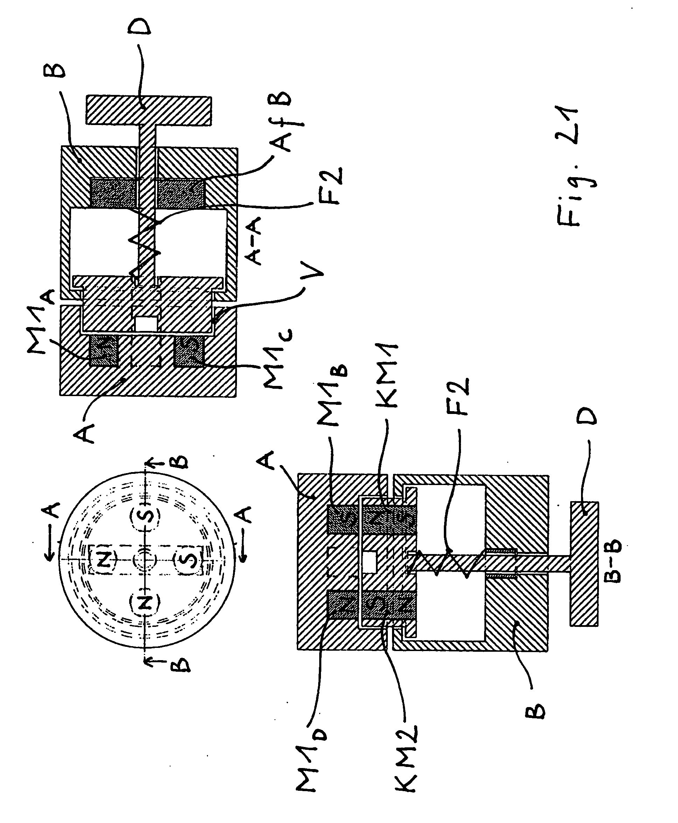

Fig. 21-25 zeigen eine allgemeine Ausführungsform der Erfindung als Dreh-Kopplungsvorrichtung nach Anspruch 3.

Fig. 21 zeigt eine Schnittdarstellung in den zwei Schnitten A-A und B-B.
Das Kopplungselement K ist in zwei Freiheitsgraden im Element B beweglich gelagert. Im ersten Freiheitsgrad ist das Element K um das Bewegungsspiel 19 zwischen der Kopplungsposition und der Entkopplungsposition beweglich. Im zweiten Freiheitsgrad ist das Kopplungselement K über den Drehgriff D drehend zu betätigen.

Im Element A ist ein Magnetsystem M1 aus den Magneten M1a,b,c,d und im Element B ist ein Anker AfB angeordnet. Im Kopplungselement K sind zwei Magnete KM1 und KM2 angeordnet. Magnetsystem M1 und Magnetsystem KM befinden sich in der gezeigten Kopplungsposition in einer Position wechselseitiger Anziehung. Anker AfB und das Magnetsystem KM befinden sich in einer Position der minimalen Überdeckung und minimaler Anziehung zueinander.

Zwischen dem Anker AfB und dem Element B ist die Feder F2 angeordnet. Die Feder ist so dimensioniert und angeordnet, dass sie in der gezeigten Position minimaler Überdeckung von AfB und KM stärker ist als die Anziehungskraft zwischen AfB und KM. Das Kopplungselement K ist also zum Element A gezogen/gedrückt und Element A und Element B sind magnetisch gekoppelt.

Zusätzlich sind Element A und Element B nach Anspruch 7 mit dem Formschluss zwischen dem aus Element B hervorstehenden Kopplungselement K und der Vertiefung V gegen Querzug gesichert.

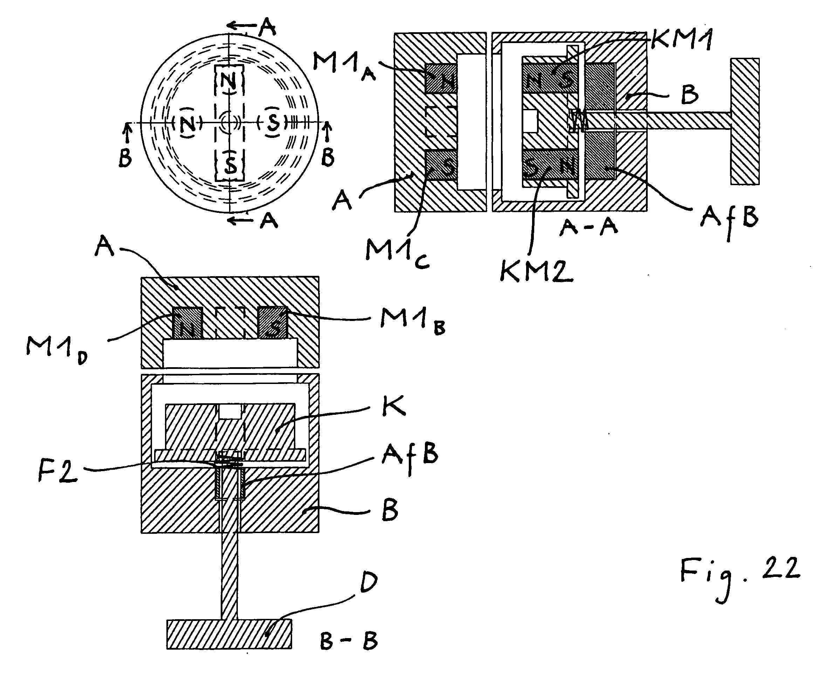

Fig. 22 zeigt in Schnittdarstellung in den zwei Schnitten A-A und B-B wie nach einer Betätigung des Kopplungselements K über den Drehgriff D die Dreh-Kopplungsvorrichtung in die Entkopplungsposition gebracht wurde.

Magnetsystem M1 und Magnetsystem KM befinden sich in der gezeigten Kopplungsposition in einer Position wechselseitiger Abstoßung. Anker AfB und das Magnetsystem KM befinden sich in einer Position der maximalen Überdeckung und maximalen Anziehung zueinander.

Die Feder 2 zwischen dem Anker AfB und dem Element B ist so dimensioniert und angeordnet, dass sie in der gezeigten Position maximaler Überdeckung von AfB und KM schwächer ist als die Anziehungskraft zwischen AfB und KM. Das Kopplungselement K ist also zum Element B gezogen/gedrückt und Element A und Element B sind magnetisch entkoppelt.

Zusätzlich ist nach Anspruch 7 der Formschluss zwischen Element A und Element B aufgehoben, da das Kopplungselement K in Element B zurückgezogen ist.

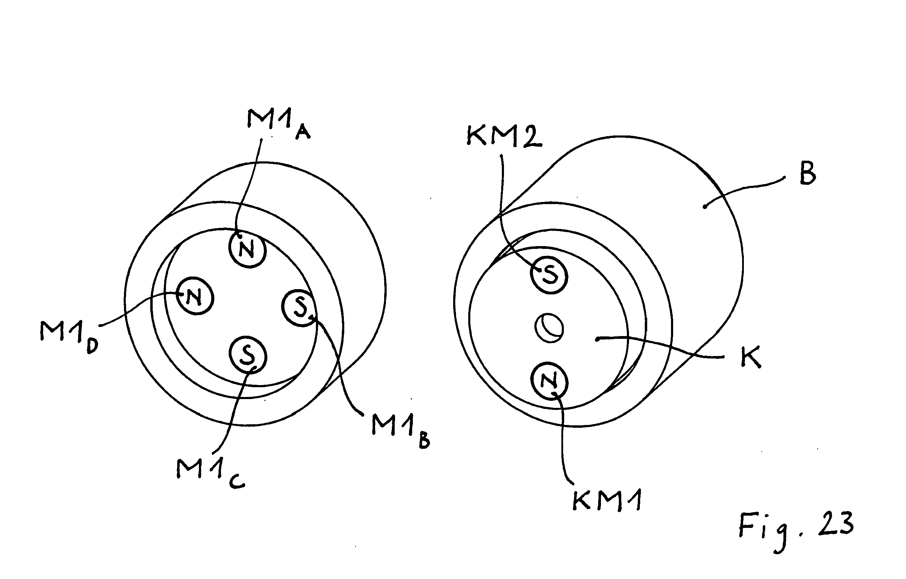

Fig. 23 zeigt in perspektivischer Ansicht mit voneinander getrennten Elementen die Elemente A und B in Kopplungsposition mit wechselseitiger magnetischer Anziehung.

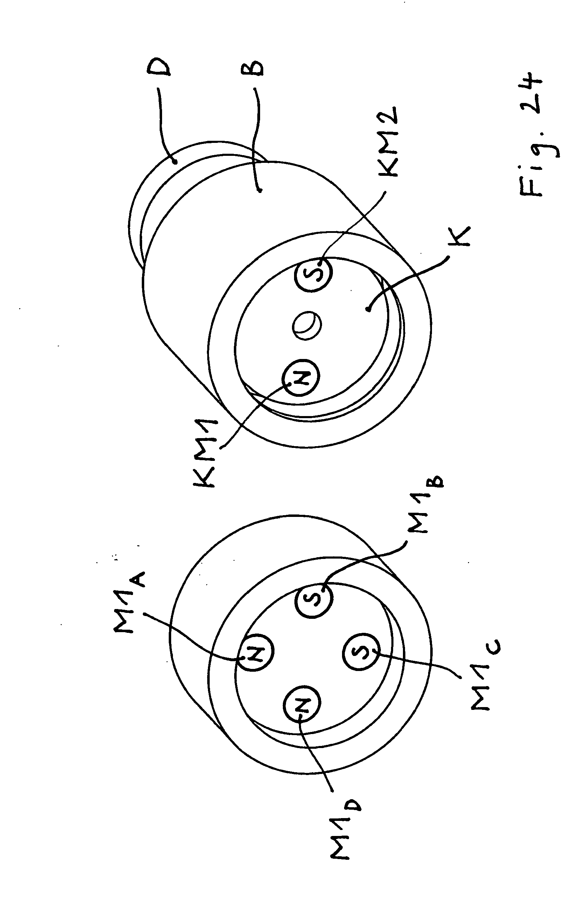

Fig. 24 zeigt in perspektivischer Ansicht mit voneinander getrennten Elementen die Elemente A und B in Entkopplungsposition mit wechselseitiger magnetischer Abstoßung.

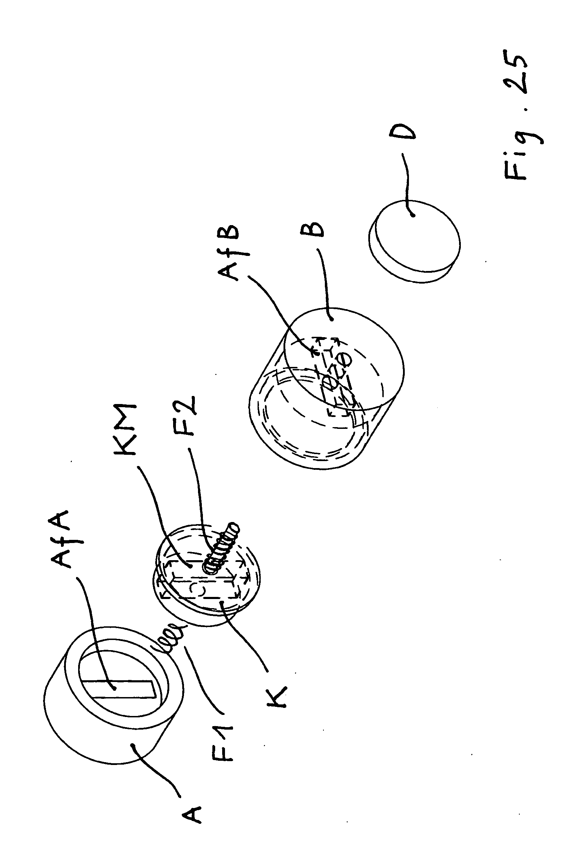

Fig. 25 zeigt eine perspektivische Explosionsdarstellung.

## Patentansprüche

1. Magnetische Kopplungsvorrichtung, bestehend aus einem Element A und einem Element B, wobei die Elemente A und B entweder mit den zu verkoppelnden Gegenständen integral verbunden oder an den Gegenständen angebracht sind und die Kopplungsvorrichtung folgende Merkmale aufweist:
- Element A und Element B werden mittels eines Kopplungselements K gekoppelt;
- das Kopplungselement K ist im Element B in zwei Freiheitsgraden beweglich:
○ im ersten Freiheitsgrad ist das Kopplungselement K um das Bewegungsspiel 19 zwischen einer Kopplungsposition in eine Entkopplungsposition bewegbar,
○ im zweiten Freiheitsgrad ist das Kopplungselement K mittels einer Eingangsbetätigung verschiebbar, **dadurch gekennzeichnet, dass**
- im Element A ein Magnetsystem M1 mit wenigstens zwei Magneten M1a und M1b oder eine Magnetanordnung mit zwei Magnetpolen angeordnet ist und im Kopplungselement K ein Magnetsystem M3 mit den Magneten M3a und M3b oder eine Magnetanordnung mit mindestens 4 Magnetpolen angeordnet ist, von denen mindestens zwei Magnetpole auf der zum Magnetsystem M1 zeigenden Vorderseite des Kopplungselements K angeordnet sind, wobei mittels der Eingangsbetätigung im zweiten Freiheitsgrad das Kopplungselement K von der Kopplungsposition, in der sich das Kopplungselement in Anziehung zu Element A befindet, in die Entkopplungsposition, in der sich das Kopplungselement in Abstoßung zu Element A befindet, im ersten Freiheitsgrad um das Bewegungsspiel 19 bewegt wird;
- im Element B ein Magnetsystem M2 mit wenigstens zwei Magnete M2a und M2b oder eine Magnetanordnung mit zwei Magnetpolen angeordnet ist und im Magnetsystem M3 des Kopplungselements K mindestens zwei Magnetpole auf der zum Magnetsystem M2 zeigenden Rückseite angeordnet sind, wobei mittels der Eingangsbetätigung im zweiten Freiheitsgrad das Kopplungselement K von der Kopplungsposition, in der sich das Kopplungselement in Abstoßung zu Element B befindet, in die Entkopplungsposition, in der sich das Kopplungselement in Anziehung zu Element B befindet, im ersten Freiheitsgrad um das Bewegungsspiel 19 bewegt wird.

2. Magnetische Kopplungsvorrichtung, bestehend aus einem Element A und einem Element B, wobei die Elemente A und B entweder mit den zu verkoppelnden Gegenständen integral verbunden oder an den Gegenständen angebracht sind und die Kopplungsvorrichtung folgende Merkmale aufweist:
- Element A und Element B werden mittels eines Kopplungselements K gekoppelt;
- das Kopplungselement K ist im Element B in zwei Freiheitsgraden beweglich:
○ im ersten Freiheitsgrad ist das Kopplungselement K um das Bewegungsspiel 19 zwischen einer Kopplungsposition in eine Entkopplungsposition bewegbar,
○ im zweiten Freiheitsgrad ist das Kopplungselement K mittels einer Eingangsbetätigung verschiebbar, **dadurch gekennzeichnet, dass**
- im Element A ein Anker AfA angeordnet, im Kopplungselement K ein Magnet KM angeordnet und zwischen beiden eine Feder F1 angeordnet ist, wobei mittels der Eingangsbetätigung im zweiten Freiheitsgrad das Kopplungselement K von einer Position der maximalen Überdeckung von Anker AfA und Magnet KM und maximaler Anziehung in eine Position der minimalen Überdeckung und minimaler Anziehungskraft bewegt wird, wobei die Feder F1 so dimensioniert und angeordnet ist, dass sie
○ in der Position der maximalen Überdeckung schwächer ist als die maximale magnetische Anziehung von Anker AfA und Magnet KM, sodass Anker AfA und Magnet sich annähern
○ und im Zustand der minimalen Überdeckung stärker ist als die minimale Anziehungskraft zwischen Anker AfA und Magnet KM, sodass Anker AfA und Magnet KM sich durch die Feder F1 abstoßen,
wobei mittels der Eingangsbetätigung im zweiten Freiheitsgrad das Kopplungselement K von der Kopplungsposition, in der sich das Kopplungselement in Anziehung zu Element A befindet, in die Entkopplungsposition, in der sich das Kopplungselement in Abstoßung zu Element A befindet, im ersten Freiheitsgrad um das Bewegungsspiel 19 bewegt wird;
- im Element B ein Anker AfB angeordnet und zwischen dem Kopplungs-element K mit dem Magnet KM und dem Anker AfB eine Feder F2 angeordnet ist, wobei mittels der Eingangsbetätigung im zweiten Freiheitsgrad das Kopplungselement K von einer Position der maximalen Überdeckung von Anker AfB und Magnet KM und maximaler Anziehung in eine Position der minimalen Überdeckung und minimaler Anziehung bewegt wird, und wobei die Feder F2 so dimensioniert und angeordnet ist, dass sie
○ in der Position der maximalen Überdeckung schwächer ist als die maximale magnetische Anziehung von Anker AfB und Magnet KM, sodass Anker AfB und Magnet sich annähern
○ und im Zustand der minimalen Überdeckung stärker ist als die minimale Anziehungskraft zwischen Anker AfB und Magnet KM, sodass Anker AfB und Magnet KM sich durch die Feder F2 abstoßen.
wobei mittels der Eingangsbetätigung im zweiten Freiheitsgrad das Kopplungselement K von der Kopplungsposition, in der sich das Kopplungselement in Abstoßung zu Element B befindet, in die Entkopplungsposition, in der sich das Kopplungselement in Anziehung zu Element B befindet, im ersten Freiheitsgrad um das Bewegungsspiel 19 bewegt wird.

3. Magnetische Kopplungsvorrichtung, bestehend aus einem Element A und einem Element B, wobei die Elemente A und B entweder mit den zu verkoppelnden Gegenständen integral verbunden oder an den Gegenständen angebracht sind und die Kopplungsvorrichtung folgende Merkmale aufweist:
- Element A und Element B werden mittels eines Kopplungselements K gekoppel;
- das Kopplungselement K ist im Element B in zwei Freiheitsgraden beweglich:
○ im ersten Freiheitsgrad ist das Kopplungselement K um das Bewegungsspiel 19 zwischen einer Kopplungsposition in eine Entkopplungsposition bewegbar,
○ im zweiten Freiheitsgrad ist das Kopplungselement K mittels einer Eingangsbetätigung verschiebbar, **dadurch gekennzeichnet, dass**
im Element A ein Magnetsystem M1 mit wenigstens zwei Magneten
M1a und M1b oder eine Magnetanordnung mit zwei Magnetpolen angeordnet ist und im Kopplungselement K das Magnetsystem M3 mit den Magneten M3a und M3b oder eine Magnetanordnung mit mindestens 2 Magnetpolen angeordnet ist, von denen mindestens zwei Magnetpole auf der zum Magnetsystem M1 zeigenden Vorderseite des Kopplungselements K angeordnet sind, wobei mittels der Eingangsbetätigung im zweiten Freiheitsgrad das Kopplungselement K von der Kopplungsposition, in der sich das Kopplungselement in Anziehung zu Element A befindet, in die Entkopplungsposition, in der sich das Kopplungselement in Abstoßung zu Element A befindet, im ersten Freiheitsgrad um das Bewegungsspiel 19 bewegt wird ;
- im Element B ein Anker AfB angeordnet und zwischen dem Kopplungs-element K mit dem Magnetsystem M3 und dem Anker AfB eine Feder F2 angeordnet ist, wobei mittels der Eingangsbetätigung im zweiten Freiheitsgrad das Kopplungselement K von einer Position der maximalen Überdeckung von Anker AfB und Magnetsystem M3 und maximaler Anziehung in eine Position der minimalen Überdeckung und minimaler Anziehung bewegt wird, und wobei die Feder F2 so dimensioniert und angeordnet ist, dass sie
○ in der Position der maximalen Überdeckung schwächer ist als die maximale magnetischen Anziehung von Anker AfB und Magnetsystem M3, sodass Anker AfB und Magnet sich annähern
○ und im Zustand der minimalen Überdeckung stärker ist als die minimale Anziehungskraft zwischen Anker AfB und Magnetsystem M3, sodass Anker AfB und Magnetsystem M3 sich durch die Feder F2 abstoßen,
wobei mittels der Eingangsbetätigung im zweiten Freiheitsgrad das Kopplungselement K von der Kopplungsposition, in der sich das Kopplungselement in Abstoßung zu Element B befindet, in die Entkopplungsposition, in der sich das Kopplungselement in Anziehung zu Element B befindet, im ersten Freiheitsgrad um das Bewegungsspiel 19 bewegt wird.

4. Magnetische Kopplungsvorrichtung nach Anspruch 1,2 oder 3 **dadurch gekennzeichnet, dass** das Kopplungselement K mittels einer Eingangsbetätigung im zweiten Freiheitsgrad gedreht wird.

5. Magnetische Kopplungsvorrichtung nach Anspruch 1,2 oder 3 **dadurch gekennzeichnet, dass** das Kopplungselement K mittels einer Eingangsbetätigung im zweiten Freiheitsgrad linear verschoben wird.

6. Magnetische Kopplungsvorrichtung nach Anspruch 1,2 oder 3 **dadurch gekennzeichnet, dass** das Kopplungselement K mittels einer Eingangsbetätigung im zweiten Freiheitsgrad auf einer Kreisbahn um den Mittelpunkt 21 geschwenkt wird.

7. Magnetische Kopplungsvorrichtung nach Anspruch 1,2 oder 3 **dadurch gekennzeichnet, dass** das Kopplungselement K in Kopplungsposition erhaben aus dem Element b herausragt und mit einer Vertiefung V im Element A einen Formschluss bildet, der Element A und B mechanisch gegen Querzug sichert.

## Claims

1. A magnetic coupling device, consisting of an element A and an element B, wherein the elements A and B either are integrally connected with the objects to be coupled or are mounted on the objects, and the coupling device has the following features:
- Element A and element B are coupled by means of a coupling element K;
- the coupling element K is movable in element B in two degrees of freedom:
o in the first degree of freedom, the coupling element K is movable about the play 19 between a coupling position and a decoupling position,
o in the second degree of freedom the coupling element K can be displaced by means of an input actuation,
**characterized in that**
- in the element A a magnetic system M1 with at least two magnets M1a and M1b or a magnet arrangement with two magnetic poles is arranged, and in the coupling element K a magnetic system M3 with the magnets M3a and M3b or a magnet arrangement with at least 4 magnetic poles is arranged, of which at least two magnetic poles are arranged on the front side of the coupling element K facing the magnetic system M1, wherein by means of the input actuation in the second degree of freedom the coupling element K is moved from the coupling position, in which the coupling element is in attraction to element A, into the decoupling position, in which the coupling element is in repulsion to the element A, in the first degree of freedom about the play 19;
- in the element B a magnetic system M2 with at least two magnets M2a and M2b or a magnet arrangement with two magnetic poles is arranged, and in the magnetic system M3 of the coupling element K at least two magnetic poles are arranged on the rear side facing the magnetic system M2, wherein by means of the input actuation in the second degree of freedom the coupling element K is moved from the coupling position, in which the coupling element is in repulsion to element B, into the decoupling position, in which the coupling element is in attraction to element B, in the first degree of freedom about the play 19.

2. A magnetic coupling device, consisting of an element A and an element B, wherein the elements A and B either are integrally connected with the objects to be coupled or are mounted on the objects, and the coupling device has the following features:
- Element A and element B are coupled by means of a coupling element K;
- the coupling element K is movable in element B in two degrees of freedom:
o in the first degree of freedom, the coupling element K is movable about the play 19 between a coupling position and a decoupling position,
o in the second degree of freedom the coupling element K can be displaced by means of an input actuation,
**characterized in that**
- in the element A an armature AfA is arranged and in the coupling element K a magnet KM is arranged and between the same a spring F1 is arranged, wherein by means of the input actuation in the second degree of freedom the coupling element K is moved from a position of maximum overlap of armature AfA and magnet KM and maximum attraction into a position of minimum overlap and minimum force of attraction, wherein the spring F1 is dimensioned and arranged such that
o in the position of maximum overlap it is weaker than the maximum magnetic attraction of armature AfA and magnet KM, so that armature AfA and magnet approach each other
o and in the condition of minimum overlap it is stronger than the minimum force of attraction between armature AfA and magnet KM, so that armature AfA and magnet KM repel each other by the spring F1,
wherein by means of the input actuation in the second degree of freedom the coupling element K is moved from the coupling position, in which the coupling element is in attraction to element A, into the decoupling position, in which the coupling element is in repulsion to element A, in the first degree of freedom about the play 19;
- in the element B an armature AfB is arranged and between the coupling element K with the magnet KM and the armature AfB a spring F2 is arranged, wherein by means of the input actuation in the second degree of freedom the coupling element K is moved from a a position of maximum overlap of armature AfB and magnet KM and maximum attraction into a position of minimum overlap and minimum attraction, and wherein the spring F2 is dimensioned and arranged such that
o in the position of maximum overlap it is weaker than the maximum magnetic attraction of armature AfB and magnet KM, so that armature AfB and magnet approach each other
o and in the condition of minimum overlap it is stronger than the minimum force of attraction between armature AfB and magnet KM, so that armature AfB and magnet KM repel each other by the spring F2,
wherein by means of the input actuation in the second degree of freedom the coupling element K is moved from the coupling position, in which the coupling element is in repulsion to element B, into the decoupling position, in which the coupling element is in attraction to element B, in the first degree of freedom about the play 19.

3. A magnetic coupling device, consisting of an element A and an element B, wherein the elements A and B either are integrally connected with the objects to be coupled or are mounted on the objects, and the coupling device has the following features:
- Element A and element B are coupled by means of a coupling element K;
- the coupling element K is movable in element B in two degrees of freedom:
o in the first degree of freedom, the coupling element K is movable about the play 19 between a coupling position and a decoupling position,
o in the second degree of freedom the coupling element K can be displaced by means of an input actuation,
**characterized in that**
- in the element A a magnetic system M1 with at least two magnets M1a and M1b or a magnet arrangement with two magnetic poles is arranged, and in the coupling element K the magnetic system M3 with the magnets M3a and M3b or a magnet arrangement with at least 2 magnetic poles is arranged, of which at least two magnetic poles are arranged on the front side of the coupling element K facing the magnetic system M1, wherein by means of the input actuation in the second degree of freedom the coupling element K is moved from the coupling position, in which the coupling element is in attraction to element A, into the decoupling position, in which the coupling element is in repulsion to element A, in the first degree of freedom about the play 19;
- in the element B an armature AfB is arranged and between the coupling element K with the magnetic system M3 and the armature AfB a spring F2 is arranged, wherein by means of the input actuation in the second degree of freedom the coupling element K is moved from a position of maximum overlap of armature AfB and magnetic system M3 and maximum attraction into a position of minimum overlap and minimum attraction, and wherein the spring F2 is dimensioned and arranged such that
o in the position of maximum overlap it is weaker than the maximum magnetic attraction of armature AfB and magnetic system M3, so that armature AfB and magnet approach each other
o and in the condition of minimum overlap it is stronger than the minimum force of attraction between armature AfB and magnetic system M3, so that armature AfB and magnetic system M3 repel each other by the spring F2,
wherein by means of the input actuation in the second degree of freedom the coupling element K is moved from the coupling position in which the coupling element is in repulsion to element B into the decoupling position in which the coupling element is in attraction to element B, in the first degree of freedom about the play 19.

4. The magnetic coupling device according to claim 1, 2 or 3, **characterized in that** the coupling element K is rotated by means of an input actuation in the second degree of freedom.

5. The magnetic coupling device according to claim 1, 2 or 3, **characterized in that** the coupling element K is linearly shifted by means of an input actuation in the second degree of freedom.

6. The magnetic coupling device according to claim 1, 2 or 3, **characterized in that** the coupling element K is swiveled on a circular path about the center 21 by means of an input actuation in the second degree of freedom.

7. The magnetic coupling device according to claim 1, 2 or 3, **characterized in that** the coupling element K prominently protrudes from the element B in the coupling position and forms a positive connection with a depression V in element A, which mechanically secures the elements A and B against transverse pull.

## Revendications

1. Dispositif de couplage magnétique, composé d'un élément A et d'un élément B, les éléments A et B étant soit reliés intégralement à des objets à coupler, soit disposés sur les objets, le dispositif de couplage présentant les caractéristiques suivantes :
- l'élément A et l'élément B sont couplés au moyen d'un élément de couplage K ;
- l'élément de couplage K est mobile dans l'élément B selon deux degrés de liberté :
-- dans le premier degré de liberté, l'élément de couplage K peut être déplacé du jeu de déplacement 19 entre une position de couplage et une position de découplage,
-- dans le deuxième degré de liberté, l'élément de couplage K peut être décalé au moyen d'un actionnement d'entrée,
**caractérisé en ce que**
- dans l'élément A est disposé un système magnétique M1 doté au moins de deux aimants M1a et M1b ou un agencement magnétique doté de deux pôles magnétiques, et dans l'élément de couplage K est disposé un système magnétique M3 doté des aimants M3a et M3b ou un agencement magnétique doté au moins de 4 pôles magnétiques dont au moins deux pôles magnétiques sont disposés sur la face avant de l'élément de couplage K tournée vers le système magnétique M1, l'actionnement d'entrée faisant en sorte que l'élément de couplage K dans le deuxième degré de liberté soit déplacé du jeu de déplacement 19 de la position de couplage, à laquelle l'élément de couplage est attiré par l'élément A, à la position de découplage, à laquelle l'élément de couplage est repoussé par l'élément A, dans le premier degré de liberté ;
- dans l'élément B est disposé un système magnétique M2 doté au moins de deux aimants M2a et M2b ou un agencement magnétique doté de deux pôles magnétiques, et dans le système magnétique M3 de l'élément de couplage K sont disposés au moins deux pôles magnétiques sur la face arrière tournée vers le système magnétique M2, l'actionnement d'entrée faisant en sorte que l'élément de couplage K dans le deuxième degré de liberté soit déplacé du jeu de déplacement 19 de la position de couplage, à laquelle l'élément de couplage est repoussé par l'élément B, à la position de découplage, à laquelle l'élément de couplage est attiré par l'élément B, dans le premier degré de liberté.

2. Dispositif de couplage magnétique, composé d'un élément A et d'un élément B, les éléments A et B étant soit reliés intégralement à des objets à coupler, soit disposés sur les objets, le dispositif de couplage présentant les caractéristiques suivantes :
- l'élément A et l'élément B sont couplés au moyen d'un élément de couplage K ;
- l'élément de couplage K est mobile dans l'élément B selon deux degrés de liberté :
-- dans le premier degré de liberté, l'élément de couplage K peut être déplacé du jeu de déplacement 19 entre une position de couplage et une position de découplage,
-- dans le deuxième degré de liberté, l'élément de couplage K peut être décalé au moyen d'un actionnement d'entrée,
**caractérisé en ce que**
- dans l'élément A est disposée une armature AfA, dans l'élément de couplage K est disposé un aimant KM et entre les deux est disposé un ressort F1, l'élément de couplage K étant déplacé au moyen de l'actionnement d'entrée dans le deuxième degré de liberté d'une position du recouvrement maximal de l'armature AfA et de l'aimant KM et d'attraction maximale à une position du recouvrement minimal et de force d'attraction minimale, le ressort F1 étant dimensionné et disposé de telle sorte que
-- dans la position du recouvrement maximal, il soit plus faible que l'attraction magnétique maximale de l'armature AfA et de l'aimant KM de sorte que l'armature AfA et l'aimant se rapprochent
--et, dans l'état du recouvrement minimal, il soit plus fort que la force d'attraction minimale entre l'armature AfA et l'aimant KM de sorte que l'armature AfA et l'aimant KM se repoussent sous l'effet du ressort F1,
au moyen de l'actionnement d'entrée dans le deuxième degré de liberté, l'élément de couplage K étant déplacé du jeu de déplacement 19 de la position de couplage, dans laquelle l'élément de couplage est attiré par l'élément A, à la position de découplage, dans laquelle l'élément de couplage est repoussé par l'élément A, dans le premier degré de liberté ;
- dans l'élément B est disposée une armature AfB et entre l'élément de couplage K doté de l'aimant KM et l'armature AfB est disposé un ressort F2, au moyen de l'actionnement d'entrée dans le deuxième degré de liberté, l'élément de couplage K étant déplacé d'une position du recouvrement maximal de l'armature AfB et de l'aimant KM et d'attraction maximale à une position du recouvrement minimal et d'attraction minimale, et le ressort F2 est dimensionné et disposé de sorte que
-- dans la position du recouvrement maximal, il soit plus faible que l'attraction magnétique maximale de l'armature AfB et de l'aimant KM de sorte que l'armature AfB et l'aimant se rapprochent
-- et, dans l'état du recouvrement minimal, il soit plus fort que la force d'attraction minimale entre l'armature AfB et l'aimant KM de sorte que l'armature AfB et l'aimant KM se repoussent sous l'effet du ressort F2,
au moyen de l'actionnement d'entrée dans le deuxième degré de liberté, l'élément de couplage K étant déplacé du jeu de déplacement 19 de la position de couplage, dans laquelle l'élément de couplage est repoussé par l'élément B, à la position de découplage, dans laquelle l'élément de couplage est attiré par l'élément B, dans le premier degré de liberté.

3. Dispositif de couplage magnétique, composé d'un élément A et d'un élément B, les éléments A et B étant soit reliés intégralement avec les objets à coupler, soit disposés sur les objets, le dispositif de couplage présentant les caractéristiques suivantes :
- l'élément A et l'élément B sont couplés au moyen d'un élément de couplage K ;
- l'élément de couplage K est mobile dans l'élément B selon deux degrés de liberté :
-- dans le premier degré de liberté, l'élément de couplage K peut être déplacé du jeu de déplacement 19 entre une position de couplage et une position de découplage,
-- dans le deuxième degré de liberté, l'élément de couplage K peut être décalé au moyen d'un actionnement d'entrée,
**caractérisé en ce que**
dans l'élément A est disposé un système magnétique M1 doté au moins de deux aimants M1 et M1b ou un agencement magnétique doté de deux pôles magnétiques et dans l'élément de couplage K est disposé le système magnétique M3 doté des aimants M3a et M3b ou un agencement magnétique doté au moins de deux pôles magnétiques dont au moins deux pôles magnétiques sont disposés sur la face avant de l'élément de couplage K tournée vers le système magnétique M1 au moyen de l'actionnement d'entrée dans le deuxième degré de liberté, l'élément de couplage K étant déplacé du jeu de déplacement 19 de la position de couplage, dans laquelle l'élément de couplage est attiré par l'élément A, à la position de découplage, dans laquelle l'élément de couplage est repoussé par l'élément A, dans le premier degré de liberté ;
- dans l'élément B est disposé une armature AfB et entre l'élément de couplage K doté du système magnétique M3 et l'armature AfB est disposé un ressort F2, au moyen de l'actionnement d'entrée dans le deuxième degré de liberté, l'élément de couplage K étant déplacé d'une position du recouvrement maximale de l'armature AfB et du système magnétique M3 et d'attraction maximale à une position du recouvrement minimal et d'attraction minimale, et le ressort F2 étant dimensionné et disposé de sorte que
--dans la position du recouvrement maximal, il soit plus faible que l'attraction magnétique maximale de l'armature AfB et du système magnétique M3 de sorte que l'armature AfB et l'aimant se rapprochent
-- et, dans l'état du recouvrement minimal, il est soit fort que la force d'attraction minimale entre l'armature AfB et le système magnétique M3 de sorte que l'armature A1 et le système magnétique M3 se repoussent sous l'effet du ressort F2,
au moyen de l'actionnement d'entrée dans le deuxième degré de liberté, l'élément de couplage K étant déplacé du jeu de déplacement 19 de la position de couplage, dans laquelle l'élément de couplage est repoussé par l'élément B, à la position de découplage, dans laquelle l'élément de couplage est attiré par l'élément B, dans le premier degré de liberté.

4. Dispositif de couplage magnétique selon la revendication 1, 2 ou 3, **caractérisé en ce que** l'élément de couplage K est tourné au moyen d'un actionnement d'entrée dans le deuxième degré de liberté.

5. Dispositif de couplage magnétique selon la revendication 1, 2 ou 3, **caractérisé en ce que** l'élément de couplage K est décalé linéairement au moyen d'un actionnement d'entrée dans le deuxième degré de liberté.

6. Dispositif de couplage magnétique selon la revendication 1, 2 ou 3, **caractérisé en ce que** l'élément de couplage K est pivoté au moyen d'un actionnement d'entrée dans le deuxième degré de liberté sur une trajectoire circulaire autour d'un point central 21.

7. Dispositif de couplage magnétique selon la revendication 1, 2 ou 3, **caractérisé en ce que**, dans la position de couplage, l'élément de couplage K fait saillie de l'élément b et forme avec un évidement V un verrouillage géométrique dans l'élément A, lequel verrouillage assure une protection mécanique des éléments A et B contre un déplacement transversal.
